# EUROPEAN PATENT SPECIFICATION

(11) **EP 1 615 312 B1**
(45) Date of publication and mention of the grant of the patent: **29.08.2012**
(21) Application number: 04024320.6
(22) Date of filing: 12.10.2004
(51) Int. Cl.: H02G 3/38

(54) **Cable management system for offices and the like**
Kabelverteilersystem für Büros und dergleichen
Système de gestion de câblage destiné à des bureaux et analogues

(30) Priority: 07.07.2004 DE 102004032924
(43) Date of publication of application: 11.01.2006
(73) Proprietor: Steelcase S.A., 67300 Schiltigheim (FR)
(72) Inventor: Dutertre, Daniel, 67200 Strasbourg (FR); Aubriet, Cécile, 67000 Strasbourg (FR); Small, John, London SW 15 2SA (GB); Holland, Mike, London SW 2 1 AA (GB); Warner, Dmitri, London SW 1 AA (GB); Tonnelli, Stefano, London EC4M 7 BY (GB)
(74) Representative: Bockhorni & Kollegen

(56) References cited:
- EP-A- 0 458 487
- US-A- 4 631 881
- US-A- 4 899 018
- US-A1- 2001 011 412

## Description

The invention relates to a cable management system for offices and the like according to the preamble of claim 1.

When furnishing open-plan offices with furniture, work places or work place stations are normally strictly decorated according to guidelines of interior designers, whereby partition wall element systems are used to separate work places of individual groups or teams from one another and also to enable a certain walling-off and separation of individual work places from one another within a working area for a group or team. Such partition wall element systems are made of modular partition wall elements built up to partition walls in different and variable configurations by assembling them variously. Such partition walls also generally serve as supports for furniture for the workplace design, such as shelf supports, compartments, hanging elements and the like. Office desks and office chairs are then generally placed in front or on both sides of partition wall elements. Moreover, partition wall elements shall also take up all required cables, cable strands and the like for electrical and communicative supply of individual work places.

For furnishing open-plan offices the assembly of partition wall elements is as a rule an independent craft. Assembly is normally done by specialized staff or in the case of unspecialized staff according to respective instructions. After assembling partition wall elements it then comes to laying cables, such as electrical cables, telephone cables, computer cables and the like, separately by staff skilled in electrical engineering as an individual craft. Mostly, for laying such cable strands in partition wall elements respective cable guides, e.g. U-shaped profiled links are provided that are outwardly covered by panels. Since said cable strands have to be laid across several partition wall elements, respective openings and recesses are often provided in the vertical posts that laterally encase said partition wall elements, for guiding said cable strands from one partition wall element to another partition wall element. Such recesses in supporting posts, however, weaken the structure of partition wall elements. Therefore cables strands are very often outwardly guided around said vertical posts of partition wall elements. Between said posts cables are covered by respective panels towards the outside, which are part of the partition walls.

It is obvious that subsequent laying of supply and communication cables and wires at a later stage by electricians in already beforehand assembled partition wall elements causes problems, since parts of already mounted partition wall elements again have to be taken apart and put together after laying of said cables and wires. Again the therefore necessary assembly work after laying said cables and wires are often cause for later complaints, since that final assembly is normally done by craftsman responsible for laying cables and wires and not by the specialized craftsman responsible for the assembly of partition wall elements.

Partition wall element systems for facilitating laying of cable strands are already known (cp. US 6,367,213 B1), that are formed as so-called cable management systems. Thereby the partition wall elements are made of a load-bearing support frame, said frame comprising respectively several distanced vertical profiled links and transversal profiled links, whereby panel walls are screwed onto the lower edge portion on both sides of the support frame and a panel hood is screwed onto the upper end portion to stiffen the support frame. Several of said partition wall elements are to be assembled in various configurations for forming partition wall element systems. For laying horizontal cable strands said profiled links comprise corresponding openings for threading cable strands from one partition wall element to the next partition wall element. In addition, the partition wall elements are equipped between the upper panel hood and the lower panel wall with field-by-field laid panel walls, said panel walls forming together with the lower panel wall and the side surface of the upper panel hood the front surfaces and visible surfaces on both sides of said partition wall element. The horizontal cable strands are laid in receptacle chambers, which are formed between the horizontal profiled links. These strands are guided to the outside by slots which are provided between adjacent panel walls, to connect work places to the corresponding supplying cables and wires. Said panel walls are thereby clipped onto said support frame, whereto said transversal profiled links are equipped with corresponding consoles, onto which said panel walls are to be clipped. Said consoles are thereby arranged in such a way, that corresponding free slot-like passages for outwardly guiding cable strands remain between adjacent panel walls. As for the rest said transversal profiled links are also provided with openings for vertical laying of cable strands within a partition wall element. Furthermore, insertion of cables that have to be laid horizontally is facilitated by a part of said panel walls being provided with a U-like cable channel, which is protruding inwardly in the direction of the support frame, whereby access to said cable shaft is given by a continuous longitudinally extending slot within said panel wall. With said cable strands being guided around vertical profiled links in the joint area between adjacent partition wall elements, laying of horizontal cable strands is therefore facilitated, however, access to the cables is complicated and electrical connection elements and the like have to be laid within a receptacle chamber, which is encased by longitudinal profiled links and therefore being limited in space. In addition said panel walls have to be dismounted. Moreover, again corresponding openings for guiding cable strands and wires have to be provided a wall of said cable channel. Altogether, that leads to a complicated assembly and said system does not offer a sufficient variability for consecutive modifications and adaptations of work places.

Comparable receiving cable troughs also result from the US-patent specification 5,394,658, that are taken up within partition wall elements and are outwardly covered by panel walls which are forming the front and visible surface of said partition wall elements.

A further cable management system for partition wall elements according to US-PS 4,631,881 comprises partition wall elements formed by support frames, said support frames comprising vertical and horizontal profiled links. Said partition wall elements are cased by panel walls that are arranged field-by-field on top of one another and are clipped onto a support frame. Thereby horizontal profiled links of a support frame are equipped with corresponding consoles that act together with complementary consoles, onto which complementary consoles the panel walls are fastened. That leads to a comparatively complex structure and causes a complicated assembly of such partition wall element systems. For laying of cable strands openings are provided on vertical posts of the support frame and cable trees are arranged on horizontal profiled links within a receptacle chamber that is encased by horizontal profiled links panel walls provided on both sides of said frame. Said profiled links are provided with cable channels on both sides. These cable channels serve for horizontal insertion of cable and wire strands. As for the rest cables and wires are outwardly guided through slots provided between field-by-field adjacent panel walls. Said panel walls that are clipped onto a support frame on both sides and are arranged field-by-field on top of one another and that form a visible surface of partition wall elements, are flush and therefore arranged in a plane which is forming the front surface of partition wall elements. In addition, panel walls are also provided as intermediate elements to be outwardly tilted for access to said receptacle chamber within partition wall elements. Said outwardly tilted panel walls are provided with cheeks on their lateral edge portions, said cheeks being folded in a L-shape and provided with plug-in openings, so that a panel wall is attachable via said cheeks onto hook-like protrusions of consoles, said consoles being fastened onto horizontal profiled links of a support frame, so that said panel wall is outwardly pivotable around said hooks. Said panel walls are engaged on the upper edge portion by clip-like connections with consoles of said upper profiled link. Due to that access to receptacle chambers within partition wall elements to cable and wire strands is possible, however, wires taken up in cable channels have to be guided through corresponding openings within said vertical profiled links, making laying work more complicated, particularly when work place design is to be changed. Therefore the receptacle chamber for taking up communication cables and wires, which is formed between horizontal profiled links and said panel walls which are arranged flush with the visible surface of partition wall elements, is limited in space.

The US-patent 4,899,018 provides an electrical race way or routing system for modular office systems. Said cable routing systems are characterized in that they include strengthening rips in their bottom plate, said rips being utilized to guide and lock the present baseline boxes to the panels. One feature of this US-patent is also a receptacle chamber, generally comprising a bottom plate, pivotally mounted side covers and a top plate fixed to a lower part of a panel whereby the side covers are outwardly protruding. Said cover arrangement enables an easier uptake of communication cables and wires. The outwardly protruding cover provides additional space for cable strands and so on. Said additional space that houses electrical connections and wire connections, however, does not facilitate the manual storage. Still, said cables have to be horizontally laid into the receptacle chamber whereby the complexity of laying the cable strands field by field from the bottom to the top into the chamber increases as more strands are connected. Opening and closing the chamber cover becomes more difficult and the allocation of respective cable wires to their origin is not possible anymore.

A similar cable management system is known from US-PS 5, 875, 594, comprising a support frame made of vertical and horizontal profiled links again equipped with field-by-field clipped on panel walls, wherein said panel walls are flush with one another and form the visible respectively front surface of the partition wall elements. Said flush arranged panel walls encase with vertical profiled links corresponding receptacle chambers for taking up horizontal cable strands to be laid and for attachment of plug-in connectors and the like. For vertical laying of cable strands profiled links are provided with openings, so that vertical cable strands can be laid field-by-field from the bottom to the top. For horizontal laying vertical posts are provided with corresponding openings. To enable access to receptacle chambers, said panel walls are attached by clip interconnections onto profiled links and fastened, so that they are detachable, when required. Additionally a part of said panel walls is also tiltably formed, whereby consoles are fastened onto horizontal profiled links of a support frame, with which corresponding complementary consoles act together, onto which the panel walls are attached. Said tiltable interconnection is realized by a joint bolt, onto which both complementary consoles are linked, meaning a fastening console onto a support frame and a console bearing said panel wall. Said tiltable joint is thereby provided on the upper edge portion of a panel wall, which is by the way provided with revolving cheeks, so that said panel wall is tilted upwards. That is of disadvantage because the upwardly tilted panel wall has to be held for an access to the receptacle chamber with a cable management. Altogether, the tiltable structure of said cable management system is laborious and furthermore horizontal cables strands and wires have to be laid from partition wall element to partition wall element within a support frame, so that corresponding openings have to be provided in vertical support profiles.

Object of the invention is to create a cable management system for open-plan offices and the like that on the one hand enables simple and fast assembly of a partition wall element system and on the other hand enables simple and fast laying of cables and wires afterwards into already mounted partition wall elements and also enables easy access to electrical and communicative cables and wires for users of work places later on as well as simply allowing later modifications of the workplace design.

That problem is solved according to the invention by the features in the characterizing part of claim 1, whereby advantageous developments of the invention are characterized by the features in the sub-claims.

According to the invention a cable management system comprises a tray-like cover that is open on both sides and serves for bridging a spacing between adjacent crossbeams of partition wall elements. Together with the available spacing between said adjacent crossbeams of said partition wall element said tray-like cover thereby forms a receptacle chamber, which is enlarged due to said cover and is serving as support for cable management, therefore as a support for cables, wires, plug-in connectors, distributors and the like, parts of cable management systems. In this respect, a cover is led out of the front surface of a partition wall element and protrudes from said front surface and therefore encases an additional receptacle chamber, which arranged in front of the actual front side of said partition wall element and complements together with said receptacle chamber being encased by horizontal crossbeams, to a correspondingly enlarged chamber for a cable management system.

The outwardly protruding cover is held distanced to a side surface of a cross beam, whereby a slot remains between said cover and cross beam for appropriately guiding cables and that also in a downwardly tilted position of said cover. Respective cable connections and the like can be comfortably and easily housed and cable strands can be readily allocated to the respective device, visually and without the need to unwire said cables.

Said cover is simply formed in a U-shape in the cross section, whereby the panel wall forming a U-web comprises correspondingly elongated panel flanges formed as U-legs of said cover on the upper and lower end portion, so that a correspondingly wide additional receptacle chamber is created by said cover. Due to the fact that said cover extends on the front over a partition wall element and furthermore said cover being open over the lateral edges, horizontal cable strands and wires are to be laid easily from a partition wall element to an adjacent partition wall element, so that said cable strands and wires are easily guided around vertical posts.

Due to the tiltable arrangement of said cover, which is preferably downwardly tilted, said cable strands are easily laid, after said partition wall element system being already assembled, in a consecutive work process by an electrician, whereby only said covers have to be downwardly tilted to get free access to the enlarged receptacle chamber. Therefore laying of cable strands from partition wall element to partition wall element is made fast and easy. After laying, said covers just have to be tilted upwards again and are attachable preferably via clip interconnections to the support frame. Due to the bellied embodiment of the cover, said cover being outwardly advanced via the actual front surface of the partition wall element, cable loops and the like are easily taken up within the partition wall elements. That gives sufficient scope for further laying possibilities later on in the course of a modified workplace design and as a consequence thereof partial reassembly of partition wall elements.

The tiltable linking of the cover takes place via a defined tiltable joint, said joint holding said cover in a tilted-out position of said cover, so that falling of said cover is prevented. Said cover is therefore to be transferred from a locking position, in which said cover is detachably fastened onto a crossbeam, into a defined tilted-out position, in which said cover is held not slack, but firmly, however tiltably, within the system. Furthermore said receptacle chamber for a cable management is freely accessible from the outside via the entire length of said cover. For laying supply cables after assembly of partition wall elements of a partition wall element system, electricians only need to tilt down said covers and lay cables and the like into said receptacle chamber of said partition wall element system. After laying of the cables, said covers only have to be tilted up into locking position again. That embodiment of a cable management system enables a simple access to said receptacle chamber, without any assembly work on said partition wall element, and therefore to a cable management at any time, also for a user of a work place for plugging in needed devices respectively into power supply plug-in connectors that are mounted between crossbeams behind said cover within said partition wall element.

In a preferred embodiment of the invention a clip interconnection of the cover takes place via two spaced fastening clips on the upper edge portion of said cover, whereby the end portion of an inwardly protruding upper panel flange of said cover is folded triangularly, so that said cover is insertable and held with its upper respectively stiffened end portion between clip legs of both fastening clips. Fastening clips are provided with a circular receptacle chamber, in which both slightly distanced clip legs meet with a free insertion slot for taking up the upper edge portion of the cover, which is thickened due to a fold. Fastening clips are fastened onto the crossbeam of the frame in a very simple and practical way by said fastening clips being provided with clamping shoes, said clamping shoes being insertable into respective T-shaped grooves of the crossbeam and being locked there.

Also the lower end portion of said cover is attachable fast and easy onto a crossbeam of the frame by a corresponding clamping shoe, which is provided with a rotational knob. Practically a joint interconnection is formed by a two-arm fastening cramp with two longitudinally extending spring clamps, said clamps being provided with outwardly or inwardly offset pin- or bolt-like joint protrusions on their free end portions and said spring clamps gripping into corresponding brackets on a lower panel flange of said cover. Said fastening cramps are arranged against a crossbeam by clamping shoes provided with rotational knobs, whereby said fastening cramps are held onto a crossbeam by a shoulder that is formed onto said rotational knob. Due to that said cover is taken up tight on the lower edge portion, however tiltably, so that said cover can be downwardly tilted and is at the same time held by said fastening cramps. If said cover is taken off and replaced by a common panel, then only said rotational knobs have to be unlocked with said clamping shoes, whereby said cover can be easily taken off and another panel, which is flush with a front surface of said partition wall element, is to be clipped onto said crossbeams. Practically, said fastening cramps are formed that long that a free end of a lower cover is held distanced to a side surface of a crossbeam, whereby a slot remains between said cover and crossbeam.

For the purpose of increasing variability regarding workplace design fastening clamps are provided for taking up connection elements, like plug-in connectors, electrical outlet boxes and the like, that are also insertable just like said fastening clamps and fasteners for a tiltable joint via clamping shoes into undercut, particularly T-shaped grooves of crossbeams. For that purpose said fastening clamps preferably comprise quick release fasteners, like particularly a foldable lock clamp. Alternatively spring clips, which are biased in locking position, or spring clamps or a Velcro-like band may be used. Consequently, connection elements may be appropriately placed at a later time, if necessary.

In accordance with a particularly advantageous further development of the invention, visible flaps are provided, that are slidably taken up in said cover and enable a lateral extension of said cover. Due to that the interconnection area of two adjacent partition wall elements may be covered, said area being generally formed by a vertical post, by extending said visible flaps laterally from said cover. Like that cable strands, which are guided around a post from partition wall element to partition wall element are outwardly hidden due to said extendable flaps. Also the angle area in case of a T-shaped connection or other angle-like connection of partition wall elements may be outwardly covered like that due to said visible flaps.

Particularly of advantage for the variability of a cable management system is the formation for vertically guiding cable strands and wires, said formation being formed by housing modules that are to be clipped together one after another in a row according to the length of said cable strands. For increasing stability respectively flexibility of housing modules clipped together in a row, flexible plastic strands are taken up in appropriate openings of the modules. Further for that purpose clip interconnections are also provided on side surfaces of said housing modules, so that a housing module strand is to be easily clipped via counter-clips comprising clamping shoes onto side surfaces of crossbeams, but also of vertical posts.

In a particularly advantageous way that enables that most various elements are being inserted and fastened within a cable management system via clamping shoes into correspondingly therefore provided slots of crossbeams and posts. Clamping shoes thereby comprise a narrow side, which width is smaller than the slot width of a crossbeam respectively post. Whereas the longitudinal side of said clamping shoes is longer than the width of said slot. Therefore said clamping shoes are to be easily inserted into the respective slots of crossbeams respectively posts and are to be locked after a 90° rotation. For that said clamping shoes are flexibly formed by splitting them through a slot into two pieces, meaning said clamping shoe having two clamping legs. That leads to a restraint of said clamping shoes against a crossbeam and a post after a 90° rotation, so that elements of a cable management system are to be fastened quick and easy, if necessary also released again. In a further embodiment a clamping shoe may be formed in one piece and is distorted due to a 90° rotation against the slots, which are placed behind, onto a crossbeam respectively post, by pressing said clamping shoes against said crossbeams slightly deforming them. That leads to a tight fit of fastening clips in said crossbeams. Thereby it is appropriate that said clamping shoes are provided with respective inclined surfaces.

Preferably said crossbeams and posts are adapted by corresponding slots to the elements of a cable management system, to enable respective fastening via clamping shoes and also fastening of covers and panels in a simple way. That leads to a high variability and universal application of such partition wall elements.

In the following preferred embodiments of the invention are described on the basis of drawings:

As there are:
- Fig. 1: is a perspective view of a partition wall element with a schematically displayed cable management system,
- Fig. 2: is a sectional view according to line A-A in fig. 1 showing a pivotable cover of a cable management system,
- Fig. 3: is a sectional view according to fig. 2, however with a swiveled-out cover,
- Fig. 4: is a lateral view of an embodiment of a cover-fastening clip,
- Fig. 5: is a perspective view of a tilted-out cover,
- Fig. 6: is a perspective view of an embodiment of a fastening clamp for, e.g. taking up plug-in connectors,
- Fig. 7: is a sectional view of a further embodiment similar to fig. 2 showing a fastening clamp according to fig. 6
- Fig. 8: is a top view of an embodiment of a fastening cramp for fastening a cover onto a partition wall element,
- Fig. 9: is a lateral view of a fastening cramp from fig. 8,
- Fig. 10: is a perspective view of a further embodiment of a fastening clip alternatively to a fastening clip described in fig. 4,
- Fig. 11: is a lateral view of a fastening clip shown in fig. 10,
- Fig. 12: is a sectional view of a fastening clip along line B-B in fig. 11,
- Fig. 13: is a perspective view of a further embodiment of a fastening clip analog to fig. 4,
- Fig. 14: is a lateral view of a fastening clip according to fig. 13,
- Fig. 15: is a lateral view of a fastening clip according to fig. 13 along cutting line B-B in fig. 14,
- Fig. 16: is a perspective view of an embodiment of a rotational fastening knob for fastening a fastening cramp according to figures 8 and 9 on a partition wall element,
- Fig. 17: is a lateral view of a rotational fastening knob as shown in fig. 16,
- Fig. 18: is a sectional view of a knob along cutting line B-B in fig. 17,
- Fig. 19: is a perspective view of a cover of a cable management system,
- Fig. 20: is a lateral view of a cover shown in fig. 19,
- Fig. 21: is a perspective view of a cover according to fig. 19 including slidably taken up flaps,
- Fig. 22: is a perspective view of a cover from fig. 19 with partially laterally extended flaps,
- Fig. 23: is a top view of a flap for a cover,
- Fig. 24: is a sectional view of a flap from fig. 23 along cutting line A-A,
- Fig. 25: is a lateral view of a flap as shown in fig. 23,
- Fig. 26: is a lateral view of a guide housing frame for taking up a flap according to fig. 24 in a cover according to fig. 21,
- Fig. 27: is a top view onto a housing frame from fig. 26,
- Fig. 28: is a sectional view of a housing frame from fig. 26 along cutting line B-B in fig. 26,
- Fig. 29: is a sectional view of a housing frame according to cutting line A-A in fig. 26,
- Fig. 30: is a further embodiment of a flap,
- Fig. 31: is a sectional view of a flap along cutting line A-A in fig. 30,
- Fig. 32: is a sectional view of a flap from fig. 30 along cutting line B-B in fig. 30,
- Fig. 33 A: is a perspective view of a further embodiment of a fastening clamp analog-to fig. 6 for taking up a plug-in connector,
- Fig. 33 B: is a perspective view of a fastening clamp according to figure 33 A in locking position,
- Fig. 34: is a perspective view of a cable tree,
- Fig. 35: is a lateral view of a cable tree shown in fig. 34,
- Fig. 36: is a sectional view along line B-B in fig. 35,
- Fig. 37: is a perspective view of a further embodiment of a cable tree,
- Fig. 38: is a front view of a panel for covering the spacing between adjacent crossbeams,
- Fig. 39: is a top view onto a panel according to fig. 38,
- Fig. 40: is a lateral view of a panel according to fig. 38,
- Fig. 41: is an enlarged view of an upper fold portion of a panel according to fig. 40,
- Fig. 42: is a perspective view of a fastening clip for fastening a panel onto a crossbeam,
- Fig. 43: is a front view of a fastening clip from fig. 42,
- Fig. 44: is a lateral view of fastening clip as well as
- Fig. 45: is a partial view of a panel in range of a upper U-fold with a fastening clip according to fig. 44.
- Fig. 46: is a perspective view of a housing module of a flexible cable housing to be clipped together by said modules,
- Fig. 47: is a top view onto a housing module,
- Fig. 48: is a sectional view along line B-B in fig. 47,
- Fig. 49: is a lateral view of a module,
- Fig. 50: is a perspective view of a fastening clip for fastening a cable housing to a partition wall element,
- Fig. 51: is a lateral view of a fastening clip as shown in fig. 50
- Fig. 52: is a sectional view along cutting line B-B of fig. 51,
- Fig. 53: is a sectional view of a further embodiment of a housing frame in modification to figures 11, 27 to 29,
- Fig. 54: is a view of a section of a housing frame according to figure 53 displaying the cutting line B-B for figure 53,
- Fig. 55: is a top view onto a flap for a housing frame according to figures 53 and 54,
- Fig. 56: is a sectional view of a flap according to figure 55 (longitudinal cutting line C-C)
- Fig. 57: is a perspective view of a further embodiment of a housing module for clamping cables,
- Fig. 58: is a clamping portion of the housing module displayed in figure 57,
- Fig. 59: a support portion for the clamping portion displayed in figure 58,

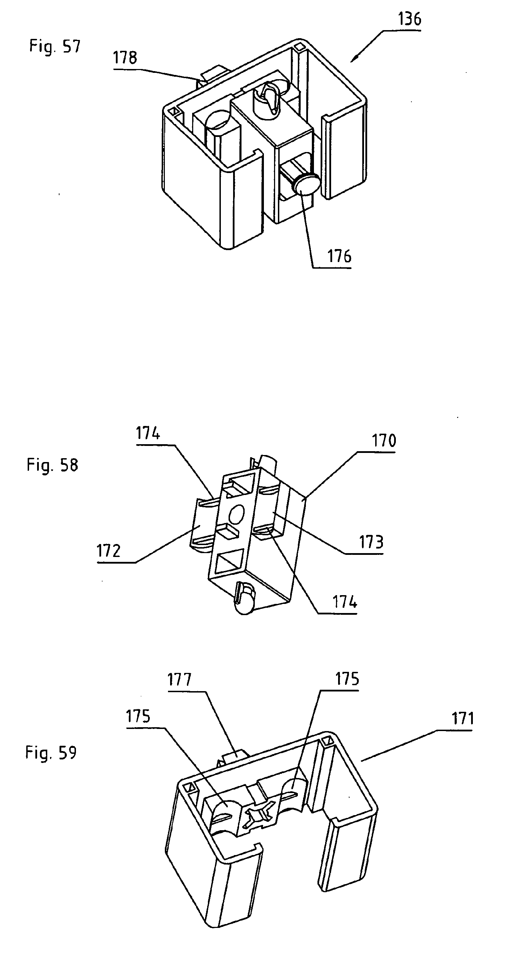

- Fig. 59 to 62: views of the clamping portion displayed in figure 58 (lateral view, sectional view, and top view) as well as

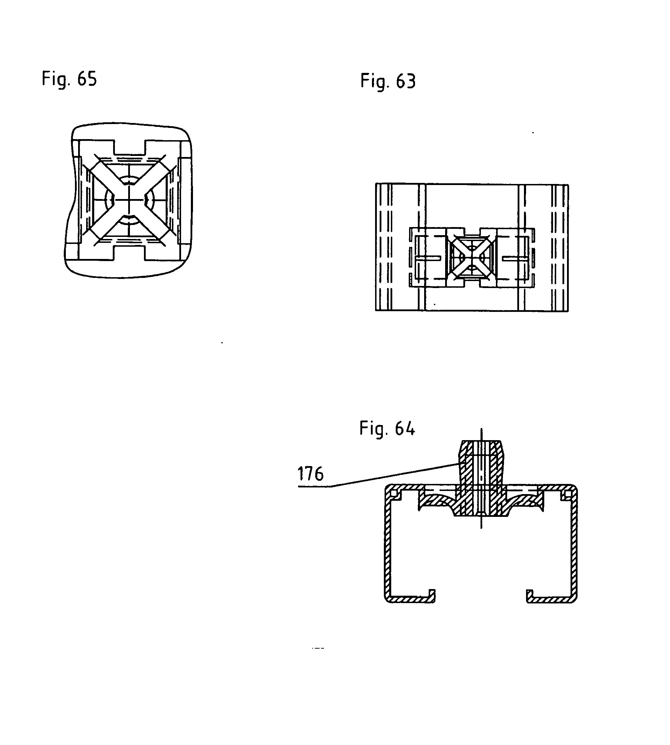

- Fig. 64 to 65: different views of the support portion displayed in figure 59.

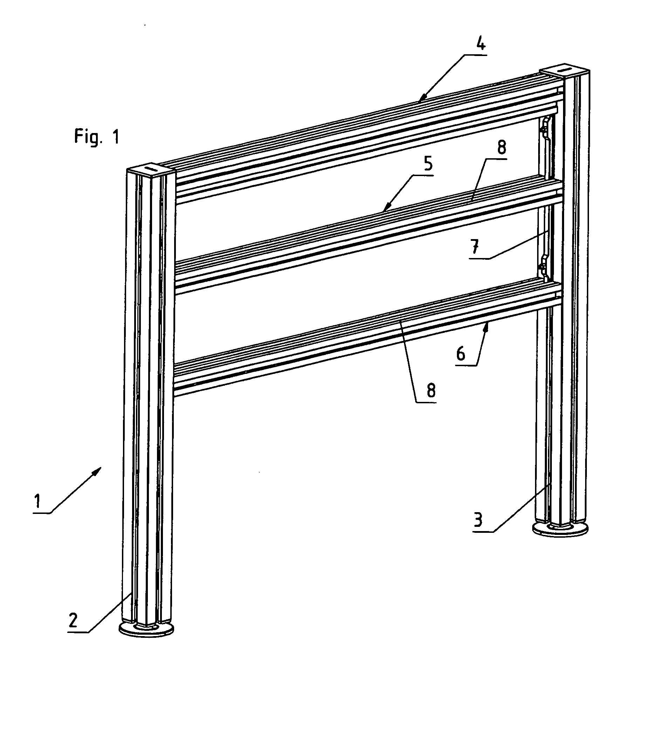

Fig. 1 shows a partition wall element 1, which is part of a partition wall system for office rooms that is not further explained in this context. Said partition wall element 1 comprises two vertical posts 2 and 3 interconnected by horizontal crossbeams 4, 5, and 6. Said crossbeams 4, 5, 6 are thereby interconnected to a unit by lateral links 7, whereby only the right link is shown in fig. 1, so that said beams 4, 5, 6 as a unit with said lateral links are interconnected preferably by fastener elements preferably in form of a cam-lock mechanism with said posts to said partition wall element 1. Said lateral links 7 are by the way frontally screwed together with said crossbeams 4 to 6. The details of that interconnection to form said partition wall element are there not further described.

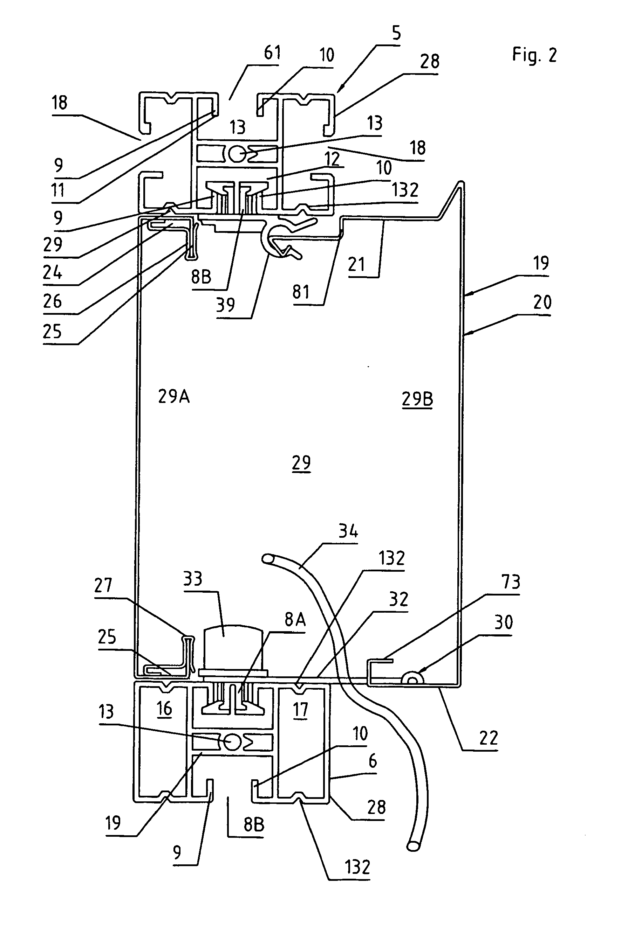

Said crossbeams 4 to 6 just like said posts 2 and 3 are formed as hollow sections and preferably extruded from aluminium leading to a very stiff structure of said partition wall element 1. Said crossbeams 5 and 6, as it is best seen from fig. 2, are provided with groove-like engagement slots 8, whereby upper slots are marked 8A and slots on the lower side are marked 8B. Only upper engagement slots are seen in fig. 1 due to the perspective view.

Said engagement slots 8 in said crossbeams 5, 6 extend preferably continuously over the entire length of cross profiles 5, 6 and are encased by flanges 9 and 10 of said cross profiles, whereby said flanges are oppositely arranged and downwardly angled forming stop shoulders 11 for engagement with fastening clamps, which are inserted into the slots and grip behind the shoulders, being described later on. The slots 8 meet in receptacle chamber 12.

Regarding cross profiles 5, 6 it is to be mentioned that in a preferred embodiment said cross profiles have two receptacle chambers 12 oppositely arranged on the upper and lower side of said crossbeams 5 and 6, whereby both receptacle chambers 12 are separated by a cross web 14 having a opening 13. Said crossbeams 5, 6 are interconnected with crossbeam 4 to a unit via lateral links 7 by self-tapping screws, with which the links are fastened onto said crossbeams. Said self-tapping screws thereby reach into bore-like openings 13 of said crossbeams. Moreover, the profiles of said crossbeams 5 and 6 also have two lateral cavities 16 and 17, which are arranged opposite as well as adjacent to receptacle chambers 12. Said cavities 16 and 17 of crossbeam 5 comprise lateral engagement slots 18. Said engagement slots 18 and said cavities 16 and 17 are, however, not of importance for a cable management system as described there so that no further detailed explanation is given.

Crossbeams 5 and 6 are arranged towards one another in a predetermined distance and the spacing between said crossbeams is closed by a cover 19, as shown on the right meaning on the front surface of partition wall elements. Said cover is thereby part of said cable management system of partition wall elements. Said cover 19, which is shown in a locking position meaning by a closed cable management system in fig. 2, is made of a panel wall 20 comprising inwardly offset panel flanges 21 and 22 on the upper and lower end, said flanges encasing a receptacle room 29B.

On the opposite side, crossbeams 5 and 6 are bridged by a flatter panel 23 comprising panel flanges 24 and 25 on the upper and lower end portion and being fastened by fastening clips 26 and 27 onto said crossbeams 5 and 6 through clamping, whereby said fastening clips are described in detail later on. As obviously seen from fig. 2, the outer surface of panel 23 is basically flush with the lateral surfaces of crossbeams 5 and 6.

Said panels 23 are generally used in connection with those partition wall elements for bridging said crossbeams and form the actual visible surface respectively front surface of partition wall elements. That leads to a flush appearance of a partition wall element. Whereas panel flanges 21 and 22 of a cover 19 are extended respectively longitudinally so that said cover 19 outwardly protrudes respectively far over the right side surfaces 28 of crossbeams 5 and 6 over the actual front surface of said partition wall element, to form an additional receptacle room respectively chamber 29B and therefore to provide a respectively large receptacle room for forming a cable management system between crossbeams 5 and 6. It goes without saying that the width of said receptacle chamber is optionally determined by a respective long formation of panel flanges 21 and 22. Due to that said receptacle chamber formed by said cover 19, a spacing 29A between crossbeams 5 and 6 is correspondingly enlarged.

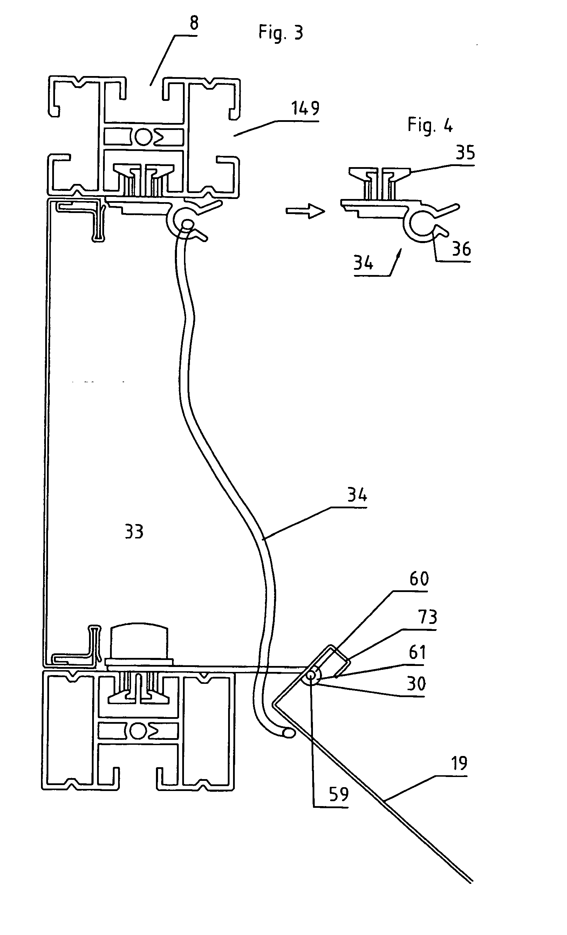

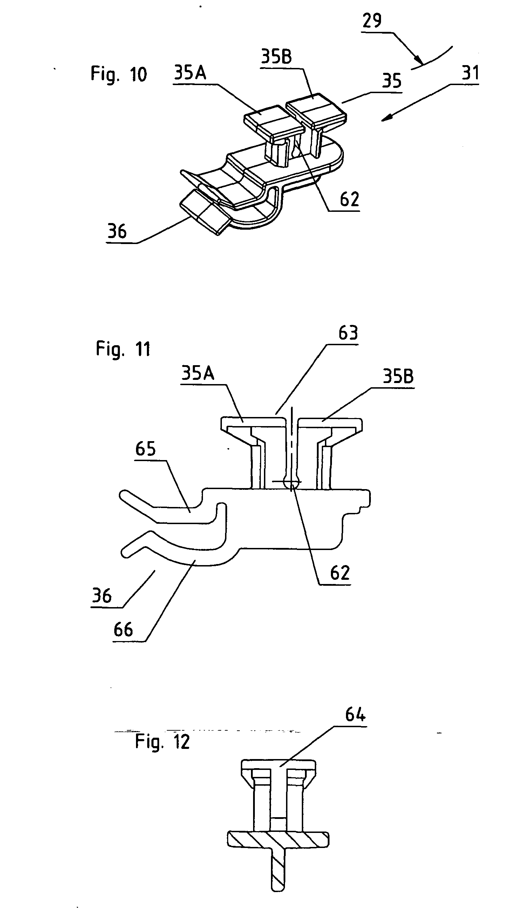

Resulting from fig. 3, a cover 19 is tiltable downwards to enable complete and free access to receptacle room 29 of a cable management system, said receptacle room being formed by the combined spacing 29A and receptacle chamber 29B. Thereby, as it is described more detailed later on, said cover 19 is linked pivotable on its lower end portion via a joint mechanism 30. The upper end portion is to be clipped into fastening clips 31, whereby an embodiment of a fastening clip is described in fig. 4 and further embodiments are described in figures 10 to 15. Said fastening clips 31 are, as it is explained more detailed below, to be plugged into engagement slots 8 and fastened by a 90° rotation. The amount of fastening clips 31 and joints 30 used depends on measurements of cover 19, whereby two distanced fastening clips 31 and two joints 30 are used in the preferred embodiment.

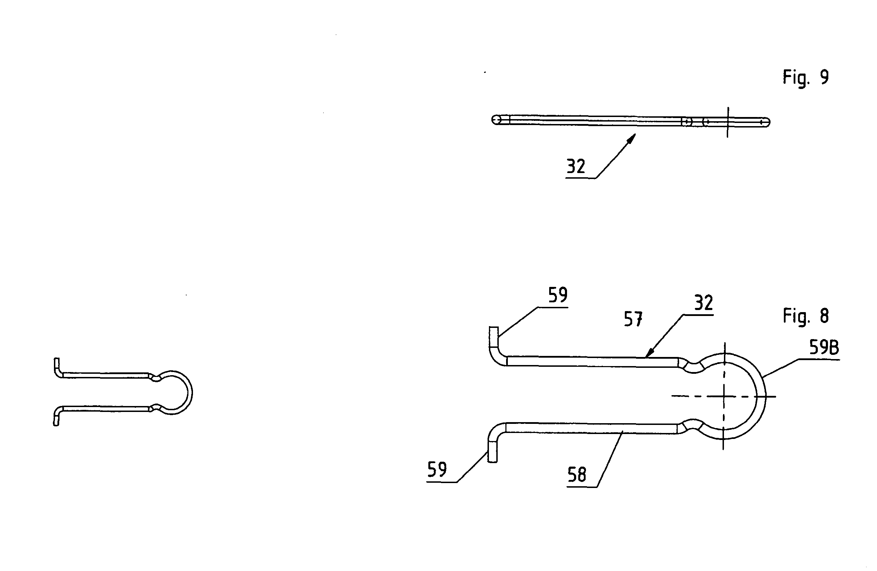

Fastening cramps 32 are used for fastening a cover on the lower end portion, said fastening cramps being described more detailed in connection with figures 8 and 9 and said fastening cramps being held by clamping elements in form of rotational fastening knobs 33 on the lower crossbeam 6, whereby said claming elements are plugged into engagement slots 8.

Lower panel flanges 22 are folded backwards towards their U-shaped end portion, said end portion facing crossbeam 6, and are in a distance to side surface 28 of crossbeam 6, said crossbeam being appropriately measured for guiding cables and the like. That is why in fig. 2 only a schematic cable 34 is indicated, which is guided through a slot between the end portion of panel flange 22 and said outer side surface 28 of crossbeam 6. Furthermore cover 19 is open on both sides, therefore without comprising cheeks.

As obviously resulting from a comparison of figures 2 and 3, said joint mechanism 30 is thereby positioned above fastening cramps 32 in such a way that a slot as seen in fig.2 does not narrow during tilting out said cover 19 into the position as seen in fig. 3, so that twitching or another damage of said cables 34 guided through a slot is prevented. It is obvious that the downwardly tilted cover is held tight by said joint mechanism.

Fastening clip according to fig. 4, preferably made of plastic, in particular thermoplastic resin, comprises a clamping shoe 35 and a receiver clip 36, whereby the free end portion of panel 21 is to be clipped into said receiver clip during enlargement and sprung-back hold of two clip brackets.

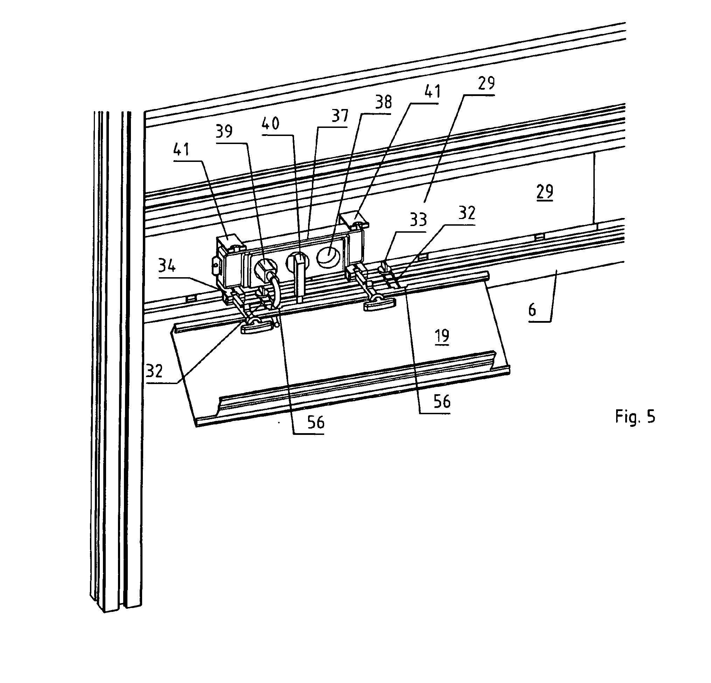

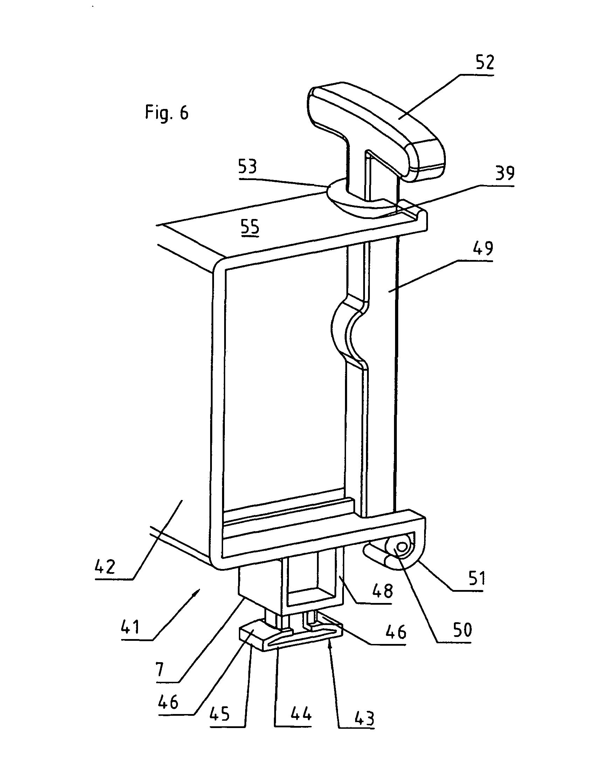

Fig. 5 shows a cover 19 in a downwardly tilted position so that a receptacle chamber 29 is freely accessible from the outside and cables, wires and the like are easily insertable from the outside into said receptacle chamber. There a cover 19 is flexibly fastened via two laterally distanced fastening cramps 32 and rotational fastening knobs 33 against crossbeam 6. Said receptacle chamber 29 is covered by panel 23 towards the other side. Said receptacle chamber 29 serves for taking up cables and the like, whereby there in fig. 5 e.g. a plug-in connector 37 with three sockets 38 for electrical connections that arranged next to one another are described. There attention has to be drawn to fig. 5 only being shown schematically and to the electrical guiding wires to the plug-in connector not being shown, however, e.g. two connectors 39 and 40 are shown to make clear that appropriate cables are optionally to be plugged into the sockets 38 after opening said cover 19. Plug-in connector 37 is thereby detachably taken up by two distanced fastening clamps 41, said clamps being preferably made of plastic and one embodiment of said clamps being described in fig. 6. Said fastening clamp thereby comprises a U-shape receiver element 42, said receiver element having an insert or clamping shoe 43 on its lower end portion, whereby said shoe 43 comprises a longitudinal side 44 and a narrow side 45. Said narrow side 45 is thereby measured in such a way that said fastening clamp 41 together with an insert shoe 43 is optionally to be easily plugged in into slots 8 of crossbeams 5 or 6. Said longitudinal side 44 is furthermore measured in such a way that it is longer than the width of slots 8. For fastening a fastening clamp is rotated by 90° after inserting an insert shoe 43 into a respective slot 8 of crossbeam 6, whereby both laterally inclined ramps 46 of said insert shoe 43 reach for attachment stop shoulders 11 on the free end portions of inwardly offset flanges 9 and 10 and a restraint resulting thereby between the lower side of a projection 48 with the profile of crossbeam 6, whereby said projection is located at an U-leg of the receiver element 42, and then the fastening clamp after a respective rotation of 90° being received and non-detachable within the crossbeam 6.

The receiving end portion of the U-shape receiver element 42 is bridged by a closure clamp 49, which is flexibly received on its lower end portion via two laterally protruding hinge pins 50 in respective bearing shells 51 of element 42. Closure clamp 49 comprises a flange-like collar 53 on the upper end portion underneath the hand grip 52, so that a closure clamp 49, which is in a way flexible, together with its collar 53 is optionally distorted through a complementary recess 54 in the U-leg 55 of the receiver element 42. Due to that said closure clamp is optionally tilted into a position as seen in fig. 5 after lifting said closure clamp 49 by said grip 52, so that a plug-in connector 37 is optionally inserted between two fastening clamps. Locking a receiver element 42 is achieved by respective lifting of closure clamp 49 and snapping in of protruding collar 53 through said U-leg 55 of a clamp, whereby said U-leg comprising a recess 54.

Like that it is possible to replace the plug-in connector 37 with three sockets 38 as shown in fig. 5 by such a connector with seven sockets or by a different appropriate component for use within a cable management system. To accomplish that only cover 19 has to be tilted downwards and both closure clamps 49 have to be opened and if need be the clamps have to be adjusted longitudinally to the slot to an appropriate distance.

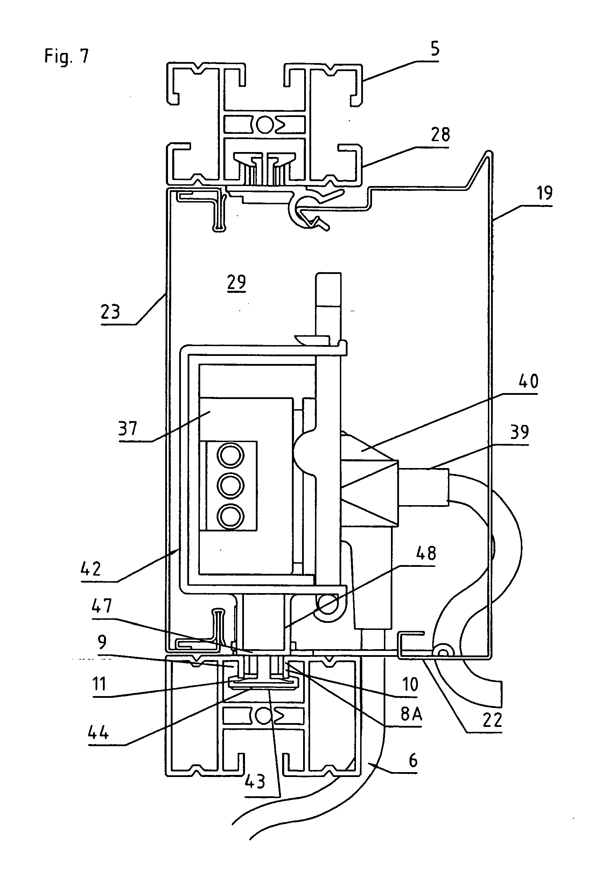

Fig. 7 shows a receiver element 42 after insertion into an upper slot 8A of said lower crossbeam 6, whereby it is seen from fig. 7 that a longitudinal side 44 of an insert shoe 43 bridges flanges 9 and 10 and is adjacent and pressure fit against stop shoulders 11 of flanges 9 and 10. Lower side 47 of projection 48 is therewith distorted with the upper surface of crossbeam 6. It is further seen from fig. 7 that said receptacle chamber 29 of a cable management system is closed on the left side by a panel 23, said panel being more or less flush with the side surfaces of crossbeams 5 and 6, whereas said receptacle chamber 29 is appropriately enlarged beyond the side surfaces 28 of the crossbeams 5 and 8 due to a linked cover 19, which is provided on the right side.

As seen from figures 5 and 7, cables 34 are optionally guided either through a slot between the free end portions of lower panel flange 22 and surface 28 of crossbeam 6 or through respective recesses 56 of said cover (see fig. 5), as it is the case for a cable of a connector 39, whereby said recesses 56 basically also serve for fastening said fastening cramps 32, which is explained more detailed later on.

Linking of said cover 19 with its lower longitudinal side takes place optionally through fastening cramps, which are described in figures 8 and 9 and are preferably made of metal. Fastening cramp 32 according to fig. 8 thereby comprises two longitudinally extended spring clamps 57 and 58 that are interconnected via a round collar 59C and have outwardly offset pin- or bolt-like protrusions 59 on their free end portions. Said protrusions 59 serve for fastening said fastening cramps 32 in respective hinge eyes onto nose-like brackets 61, whereby said brackets are formed during stamping out of recesses 56. Like that a simple joint mechanism 30 of a downwardly tiltable cover 19 is formed, whereby fastening is easily achieved via fastening cramps 32 and rotational fastening knobs 33. Like that a cable management system is in any way to be shifted and placed over the length of crossbeams 5 and 6 depending on where access through said cover 19 is desired. Therefore only both rotational knobs 33 have to be loosened through a 90° rotation, to easily shift said cover 19 over the length of crossbeams 5 and 6. As soon as said cover 19 is in upright position again, said rotational knobs 33 are rotated by 90° into the position as seen in fig. 2. Of course, then also upper fastening clips 31 have to be respectively adjusted in said upper crossbeam 5.

Instead of a closure clamp according to figure 6 for locking the receptacle chamber that is formed by the receiver element 42, of course, also other mechanisms are used optionally, like linked spring clamps or spring clips, which are biased into closure direction. By tilting away the spring clamps opposite to the spring tension opening would be accomplished. After releasing the spring clamp it would then again tilt back automatically into closure position due to the spring tension and hold the inserted adjacent element or the like.

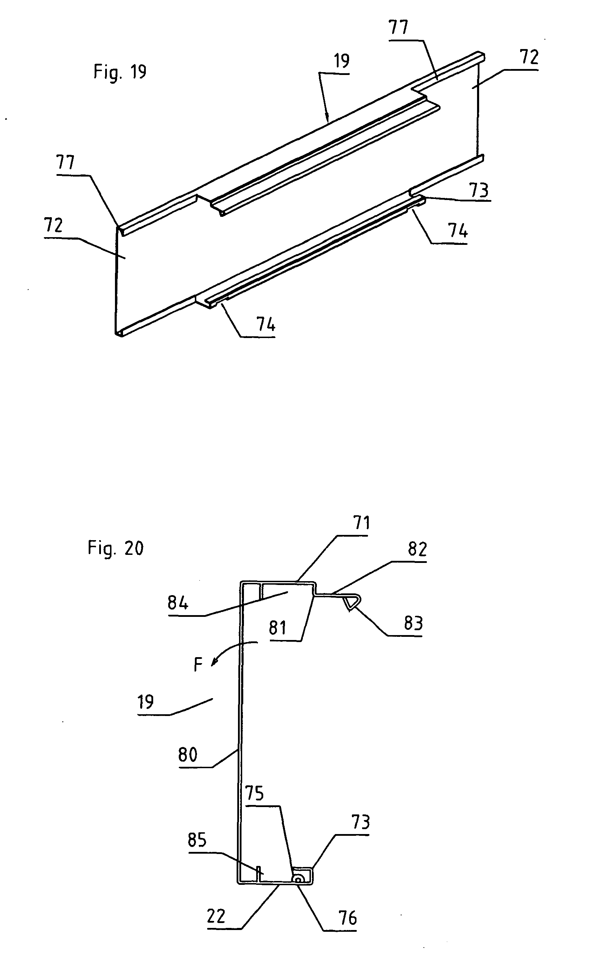

Figures 10 to 12 finally show a further embodiment of a fastening clip 31 for insertion into slot 8B of said upper beam 5 and for fastening of an upper panel flange 21 of a cover 19. Said fastening clip 31 preferably made of one piece of plastic comprises again a clamping shoe 35 for insertion into the slot 8B and also comprises a receiver clip 36. The clamping shoe 35 is thereby divided into two parts, meaning into two basically L-shaped legs 35A and 35B that together form a T-profile. The legs 35A and 35B are separated from one another by a slot 62 so that a restricted inward movement of both L-legs towards one another is enabled while rotating the fastening clip after insertion of the clamping shoe 35 into slot 8. There, just like in the case of said insert shoe 43 in the embodiment according to figure 6, it also applies that the longitudinal side 63 being formed by both L-legs 35A and 35B is larger than the width of slot 8 and that the narrow side 64 according to figure 12 of the clamping shoe 35 is smaller than the width of the slot. Like that the fastening clip is easily inserted into slot 8 of upper crossbeam 5. By a 90° rotation locking respectively fastening of a fastening clip in a crossbeam is effected, whereby both L-legs are slightly pressed together between flanges 9 and 10 of a slot, so that the fastening clip is held in the crossbeam within slot 8 due to resilient elasticity. The receiver clip 36 is thereby in fastening position directed to the side, where said cover 19 is taken up. The receiver clip 36 is obviously formed by two resilient and oppositely arranged spring brackets 65 and 66, for clipping said cover with said panel flange 21 between both spring brackets 65 and 66, with the free end portion of the upper panel flange 21 optionally being thickened for that purpose, as seen in figure 2 and to be described in figure 20 later on.

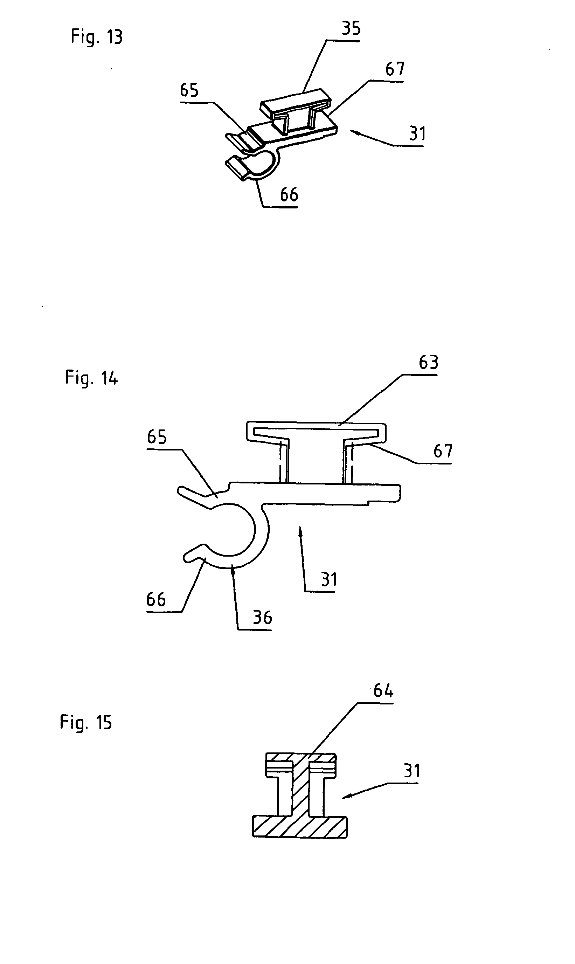

A further similar embodiment of such a fastening clip for said upper panel flange 21 of said cover 19 is described in figures 13 to 15, whereby said clip as well for the embodiments described beforehand are optionally used for other purposes within a cable management system.

Fastening clip according to figures 13 to 15 basically differs from fastening clip according to figures 10 to 12 in both spring bracket 65 and 66 being designed slightly different, particularly the insert slot encased by both spring brackets 65 and 66 being larger as it is the case in the embodiment according to figure 10. Furthermore, a one-piece clamping shoe 35 is formed similar to an insert shoe 43 according to fig. 6. Restraint is then effected via an inclined surface 67 on the lower side of clamping shoe 35. There it also applies that said longitudinal side 63 is larger than said slot 8 and that said narrow side 64 is smaller than slot 8 of crossbeams 5 and 6.

Provision of a fastening clip onto a crossbeam is thereby taking place via inclined surfaces 67, cooperating together with stop shoulders of flanges 9 and 10, and thereby formed also ramp-like as a type of cam lobe, leading to clamping of a clamping shoe against stop shoulders by rotating an insert shoe. Particularly for the case, when fastening clips have to be inserted more or less only once, therefore during first assembly of partition wall elements, such a cam-like ramp surface is not needed in the range of said clamping shoe, since it is sufficient that by rotation of said inserted clamping shoe by 90° said free ends respectively stop shoulders of flanges 9 and 10 are pressed into said fastening clips under deformation of inclined surface 67. That enables a tight fit of fastening clips into crossbeams that is also releasable again, if required.

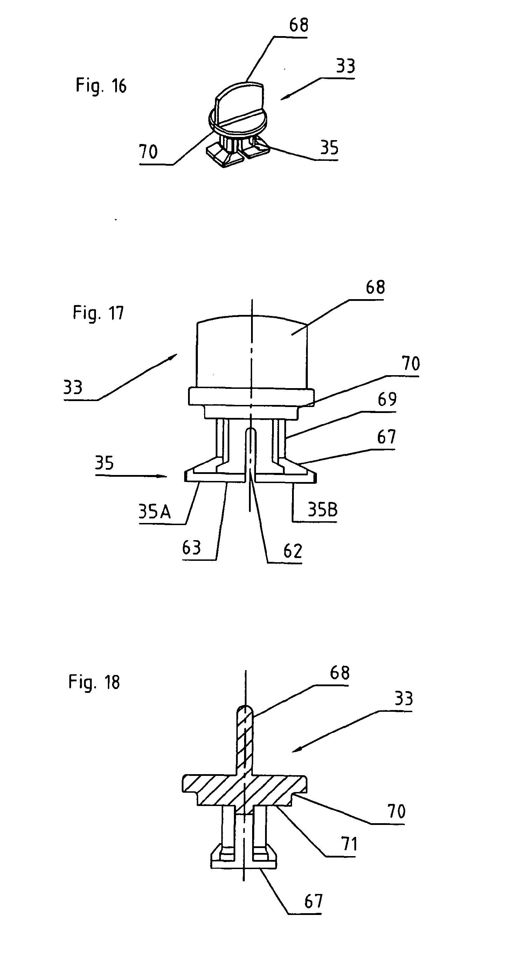

Figures 16 to 18 show a rotational fastening knob as already described in connection with figure 2, said fastening knob being particularly used for fastening the lower end portion of said cover 19. Said rotational fastening knob 33 comprises a grip element 68 for a rotational movement of a knob as well as said knob comprises a clamping shoe that is basically formed analog to a clamping shoe according to figures 10 to 12, meaning a clamping shoe formed by two L-legs 35A and 35B, said legs being separated from one another by a slot 62. Enlargement of a clamping shoe via an inclined ramp 67, said ramp beginning at a shaft section 69 adjacent to grip element 68, is also analog to a clamping shoe according to figures 10 to 12, so that the same reference numerals are used. Of course, a narrow side 64 is there also smaller than the width of a slot 8 of a crossbeam and respectively is a longitudinal side 63, which is defined by both L-legs 60 and 61, larger than the width of a slot 8 of crossbeams. By rotating grip element 68 after inserting a clamping shoe 35, both L-legs distort and clamp against downwardly offset flanges 9 and 10 of said crossbeams (see fig. 2). A revolving shoulder 70 below the grip element 68 serves for attaching a fastening cramp 32, which is fastened with a rotational fastening knob 33, according to figures 8 and 9, whereby said fastening cramp 32, which is described in figures 8 and 9, is adjacent with its round collar 59C on the lower end portion of a grip element 68 in the range of a shoulder 70. By rotating said rotational fastening knob, said fastening cramp 32 is distorted against the upper surface of crossbeam 6, which is obviously seen in fig. 2. Accordingly, the lower side 71 of said grip element 68 lies on the upper surface of the crossbeam 6.

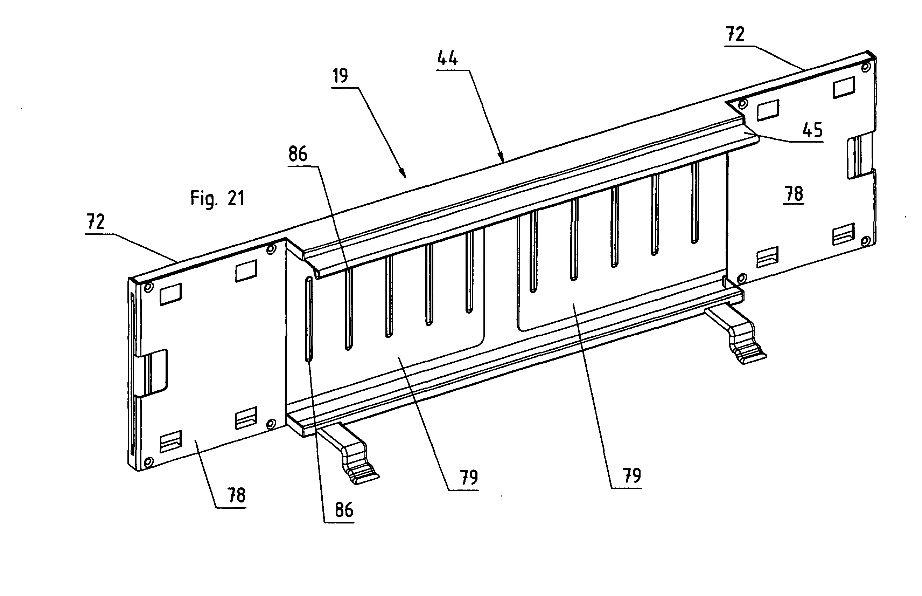

The further embodiment of a cover 19 in a perspective view in fig. 19 comprises two longer laterally protruding cheeks 72 compared to the described cover 19 in fig. 5, said protruding checks are provided for slidably taking up flaps as described in connection with figures 21 to 31. It goes without saying that if desired only one of said two sides of said cover is extended. The central area of said cover 19 is formed in accordance with the embodiment of figure 5. Resulting from a lateral view of a cover 19 as seen in figure 20, an upper panel flange 21 is longer than a lower panel flange 22, whereby in locking position of said cover 19 a slot for guiding cables and the like remains between an end portion folded in U-shape 73 and an opposite surface of said lower crossbeam 6, said opposite surface not being shown in figure 20 (cp. figure 2). Said end portion folded in U-shape 73, as seen in figure 19, comprises two openings respectively recesses 74 analog to recesses 56 in the embodiment according to figure 5, whereby said openings respectively recesses are for that purpose formed by stamping and serve for taking up fastening cramps or clamps, as e.g. described in figures 8 and 9, for linking cover 19 on a lower crossbeam 6. By stamping openings 74, brackets 75 with hinge eyes 76 are formed, whereby said brackets are oppositely arranged and in which outwardly offset protrusions 59 of fastening clips according to figures 8 and 9 are engaged. Laterally protruding cheeks 72 are provided with U-shape folded end portions 77 on the upper and lower edge portion for taking up a housing frame 78 (cp. figure 21), to form a shifting support respectively guide for flaps 79 (cp. figure 21). Fastening is effected through countersunk screws, whereby respective fastening openings from figure 19 are seen in the U-shape folded end portions.

An upper panel flange 21 extends just like a lower panel flange 22 in that described embodiment perpendicularly from a panel wall 80 of a cover 19, however, it is provided with a downward offsetting 81 at about a height of the outwardly directed surface of an end portion 73, on which offsetting a further panel flange portion 82 extending perpendicularly from said panel wall 80 is adjacent, said panel flange portion ending with a thickened portion 83. In the embodiment as seen in figure 20 said thickened end portion 83 for insertion into a respective fastening clip according to figures 4, 10 or 13 is formed by a fold comprising the form of a triangle in a sectional view. Resulting from said offsetting 81 of said upper panel flange 21 and from the U-shaped fold 73 of said lower panel flange 22 are receptacles 84 and 85 in the range of said panel flanges, said receptacles serving as cable guide, to catch cable loops and the like within the receptacles 84 and 85, when said cover 19 is tilted in direction of arrow F according to figure 20. That facilitates inward and outward tilting of the cover.

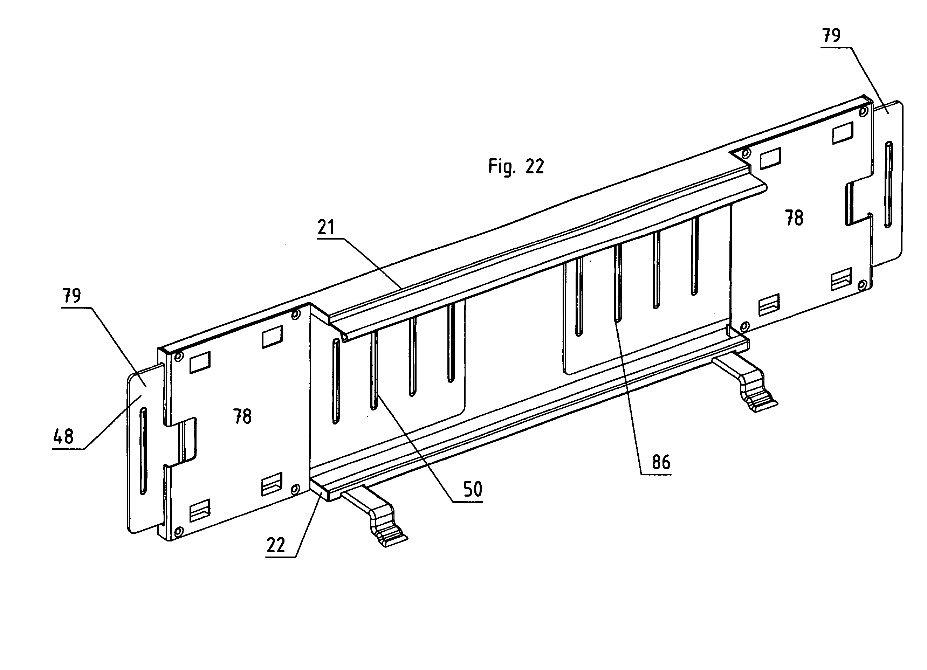

Figure 21 shows a cover according to figure 19, with laterally slidably taken up flaps 79, that are guided and held against laterally protruding cheeks 72, particularly in an housing frame 78. Said flaps 79 comprising longitudinally extended lock protrusions 86 that are arranged in a distance to one another in longitudinal direction of said flaps. 79. As seen from a comparison with figure 22 said flaps 79 adjustable step by step in longitudinal direction of said cover 19 for lateral respective step by step extension of said cover 19 on the side. Of course, it is also possible forming said flaps without respective lock protrusions so that a step-free adjustment is provided, whereby a respective hold in the desired pulled-out position is to be accomplished by interacting springs and the like.

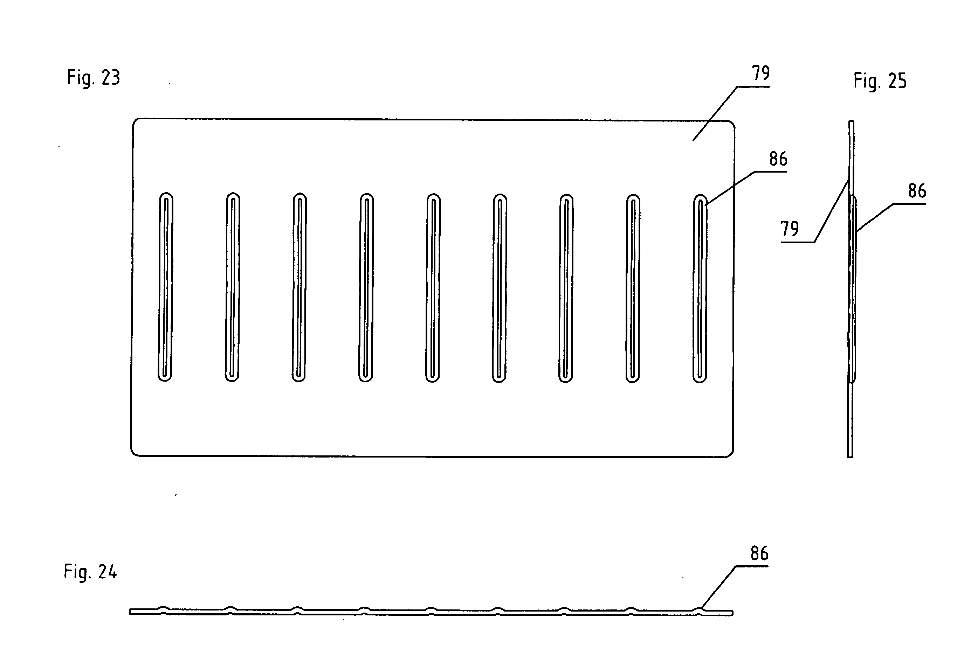

From figures 23 to 25 the structure of said flaps 79 with longitudinally extended lock protrusions 86 are seen. Said lock protrusions 86 are formed by stamped beads that have a U-like shape. Said cover 19 including a housing frame 78 and flaps 79 are preferably made of metal plate, for folding said cover and forming said beads accordingly. Of course, said elements are optionally to be made of plastic through injection molding or extrusion procedure. Resulting from figure 25 continuously formed lock protrusions 86 as described in the embodiment extend basically over the centerpiece of flap 79 and therefore end with a distance to a upper and lower edge portion.

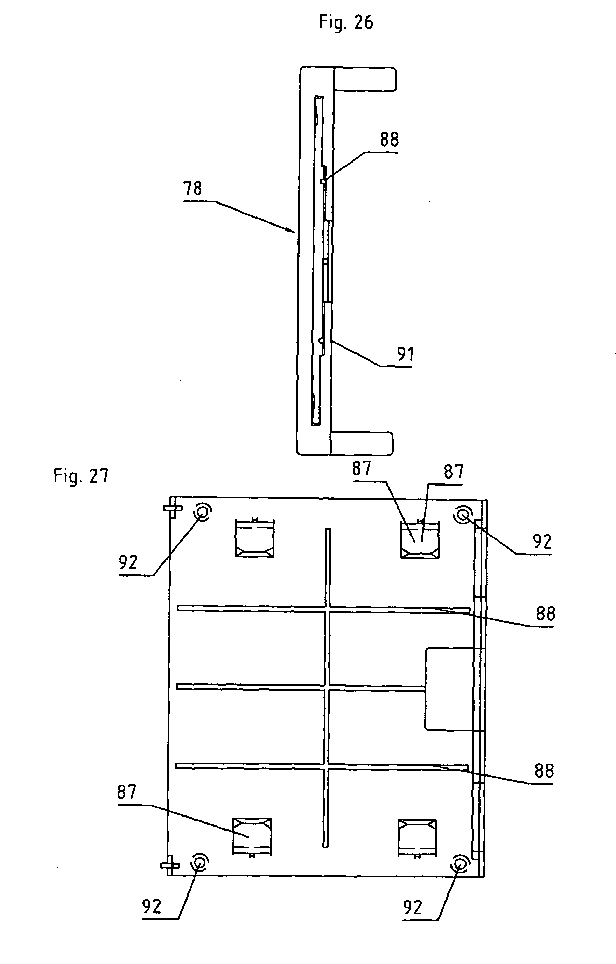

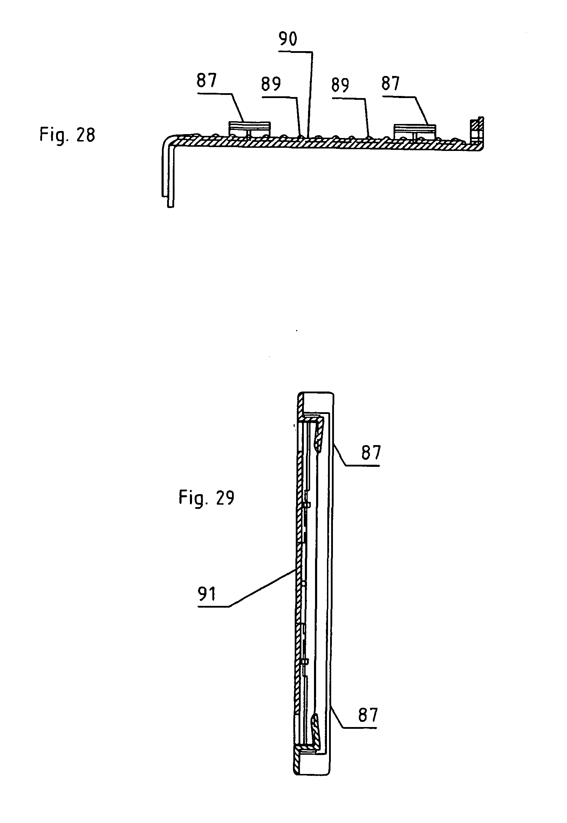

Figures 26 to 29 show an embodiment of a housing frame 78, in which four resilient straps 87 are stamped out and that are provided with at least two longitudinal locking ribs 88 being parallel arranged to one another. Said locking ribs 88 comprise according to figure 28 protrusions 89 being formed as lock protrusions 86 slightly distanced to one another and encasing lock recesses 90 between one another. Distances of said protrusions 89 are, however, in accordance with distances of said protrusions 86 of said flaps 79. Said flap 79 is thereby slidably held against a certain spring pressure between a casing wall 91 comprising formed locking ribs 88 and the stamped-out flanges 87 for enabling a step-by step lock adjustment of said flaps due to protrusions 86 gripping into recesses 90 of locking ribs 88. Thereby a fine step-by step lock adjustment is possible in accordance with distances of said lock recesses 90 in locking ribs 88. A housing frame 78 is fastened by countersunk screws, whereby respective openings 92 are provided in said housing frame 78, with the countersunk screws being arranged in accordance with respective openings 92 in folded U-shape end portions 77 of laterally protruding cheeks of said cover 19.

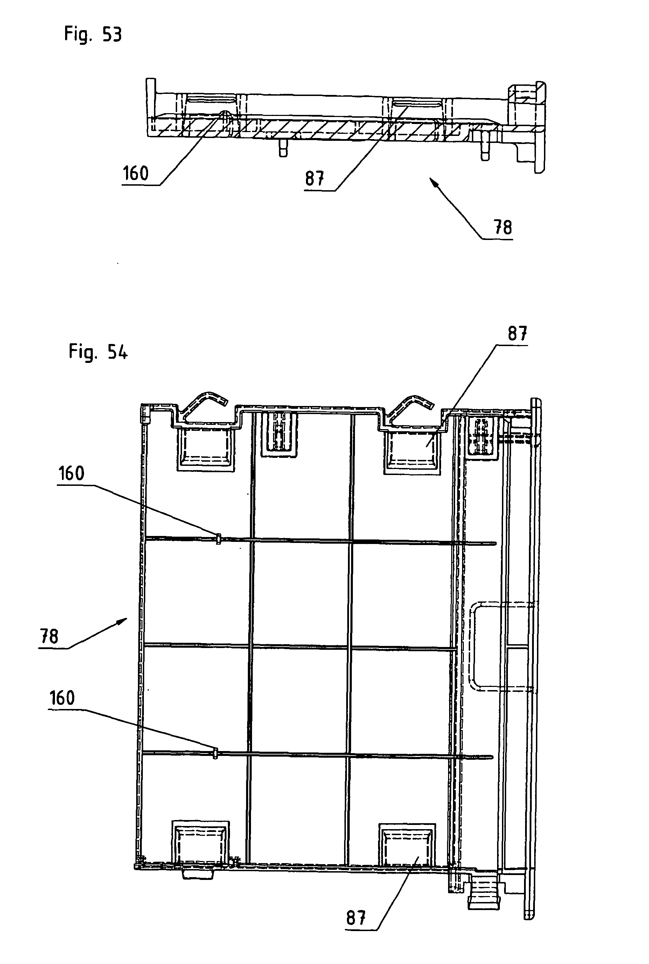

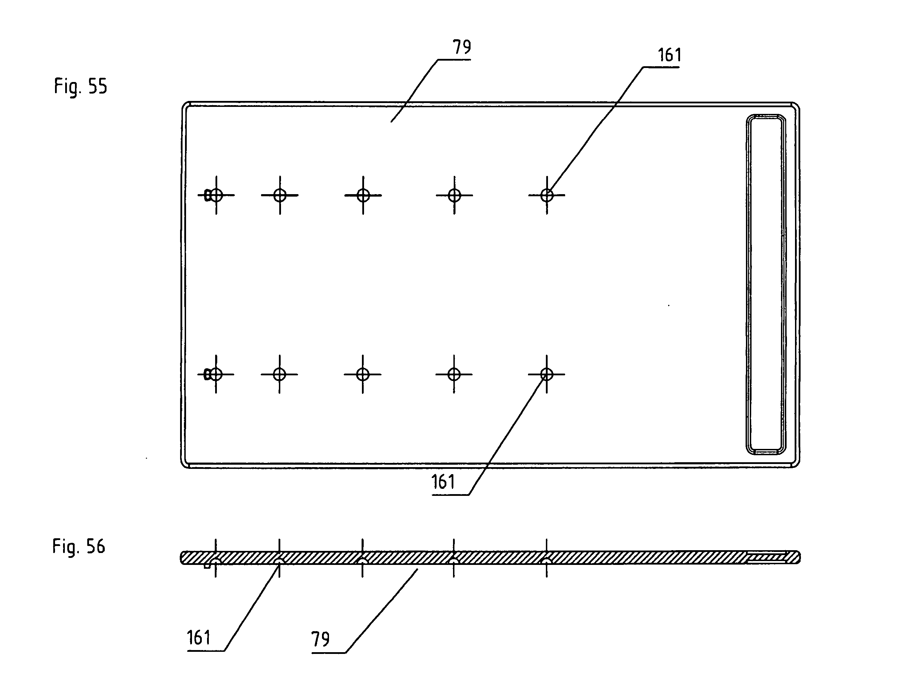

Figures 53 and 54 show a further embodiment of a part of the housing frame 78 for accommodation of a further embodiment of a flap as displayed in figures 55 and 56. In alteration to the embodiment according to figures 26 to 29 the housing frame 78 with the therefrom stamped out resilient straps 87 features instead of two parallel arranged locking ribs with lock protrusions 89 arranged in a row henceforth only two lock protrusions 160 that can be best seen from the sectional view of figure 53. That regards spherical shallot shaped protrusions 160 co-acting with complementary recesses 161 on flap 79 according to figures 55 and 56. Also therefore a step-by-step adjustment of a flap 79 relatively to cover 19 respectively to housing frame 78 is enabled. Again in alteration to the aforementioned embodiments according to figures 21 to 32 the distance of several recesses 161 in each row on flap 79 may be variously selected, therefore not uniformly as in the aforementioned embodiments. The distances between recesses 161 in figure 55 and 56 are hereby selected adaptively to the other measurements of the components of the cable management system, whereby the distances are laid in such a way that in the case of partition wall elements angular to one another a lateral cover generally without gaps is also enabled in the joint area of the partition wall elements by respective extension and engagement of flap 79. Hereby said partition wall elements can be arranged together under a 90° angle or under a different angle so that said flaps 79 can be extended so far both on the inner surface of the corner and the outer surface of the corner so that said partition wall elements are basically adjacent to one another with adjacent flaps 79 of adjacent covers and therefore no visible gap remains towards the outside. This results in an optical facing of cable receptacle chambers also in regard of angular assembled partition wall elements.

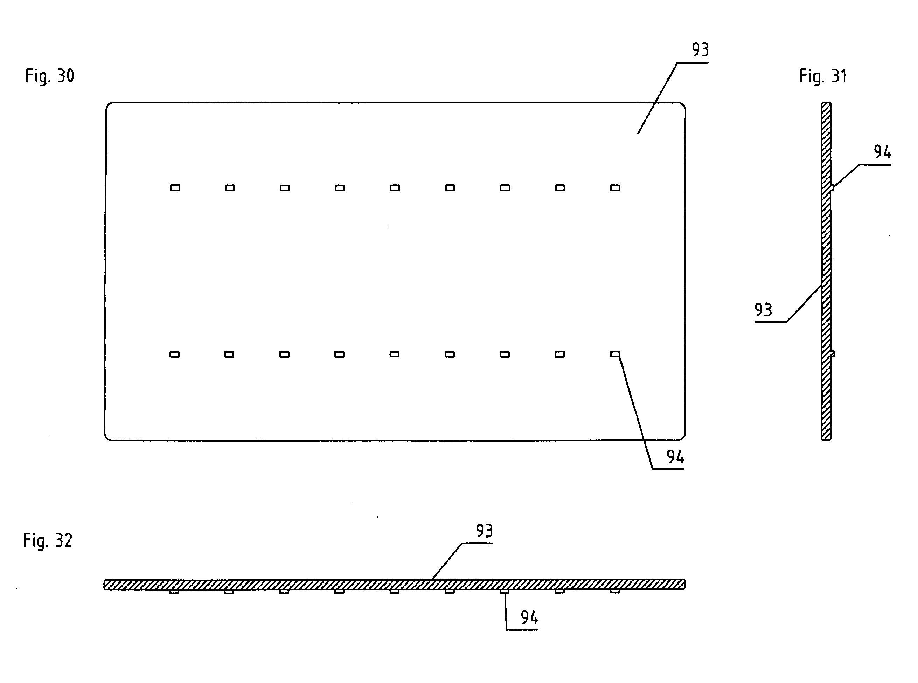

The embodiment of a flap 93 described in figures 30 to 32 differs from the embodiment according to figure 23 by punctual lock protrusions 94 being arranged in two parallel rows and in predetermined consistent distances to one another, meaning not continuously longitudinally extended like lock protrusions 86 in a flap 79. Of course, then a housing frame 78 is provided with respective lock recesses also enabling a fine step-by-step adjustment of flaps in relation to cover 19.

Due to said extended flaps a cover is optionally to be enlarged, which is always advisable, when partition wall elements are e.g. adjacent to one another under a 90° angle, for bridging and outwardly covering gaps between cover and vertical posts of partition wall elements by sliding said flaps respectively in relation to a housing frame in direction of vertical posts.

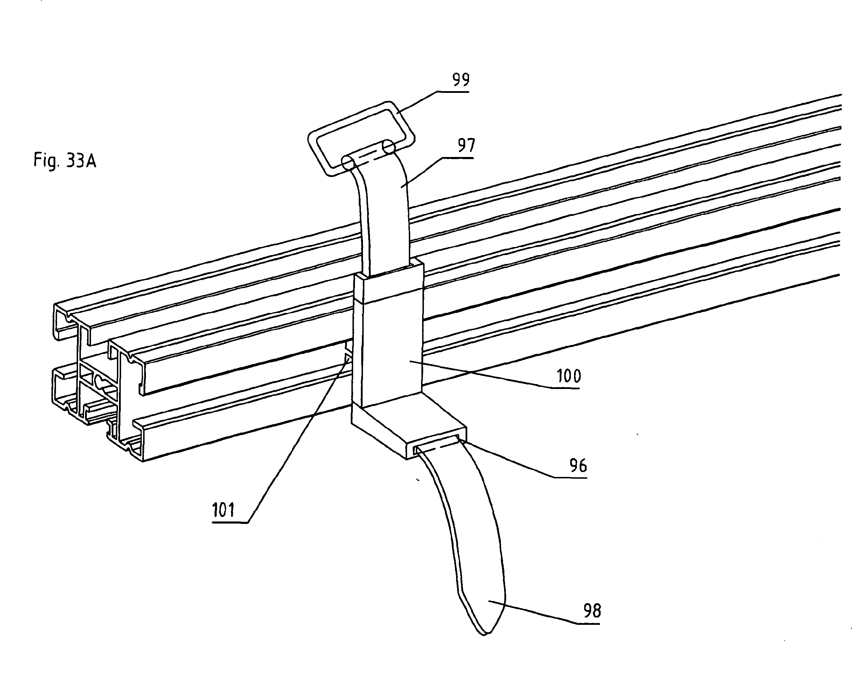

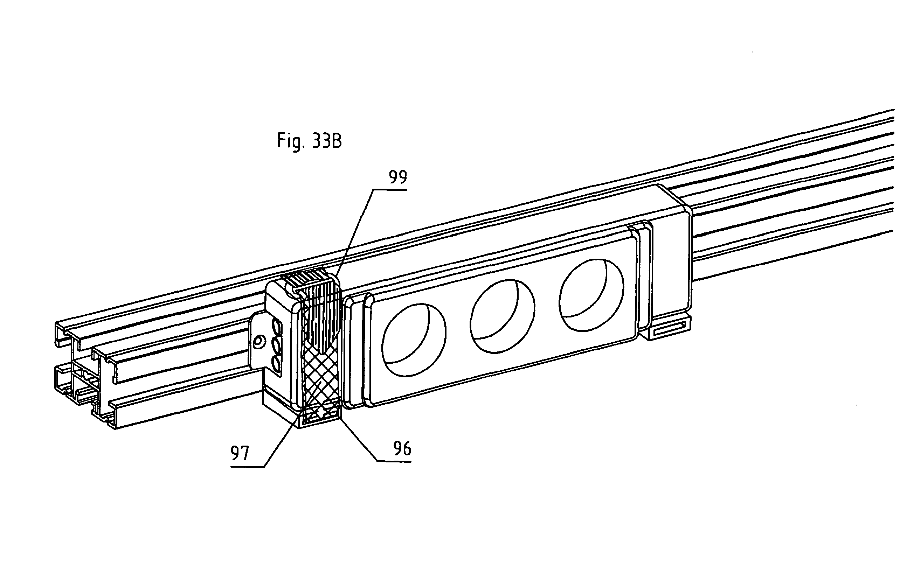

Figure 33A finally shows a further embodiment of a fastening clamp alternatively to a fastening clamp described in figure 6. Fastening clamp 95 is formed by a L-shaped corner angle resulting from two housing halves that are glued or screwed together, said housing halves encasing a guide slot 96 between one another, and between which a fastening belt in about the form of a Velcro band or the like is being drawn. Said fastening belt 97 is thereby slidably guided in a guide slot 96. After inserting a component of a cable management system, like a plug-in connector (cp. fig. 33 B) or the like, fastening is effectuated by guiding an end 98 of said band 97 through an eye 99, said eye being formed on the other end, and distorting said end through a Velcro band. For fastening a fastening clamp 95 in one of said crossbeams 5 and 6 a clamping shoe 101 is provided on a L-leg 100 of a fastening clamp 95 on the bottom, said clamping shoe being optionally formed respectively according to the embodiment of a clamping shoe in figure 10. That enables fastening said fastening clamp at an appropriate position on a crossbeam and also shifting it easily appropriately longitudinally on said crossbeam.

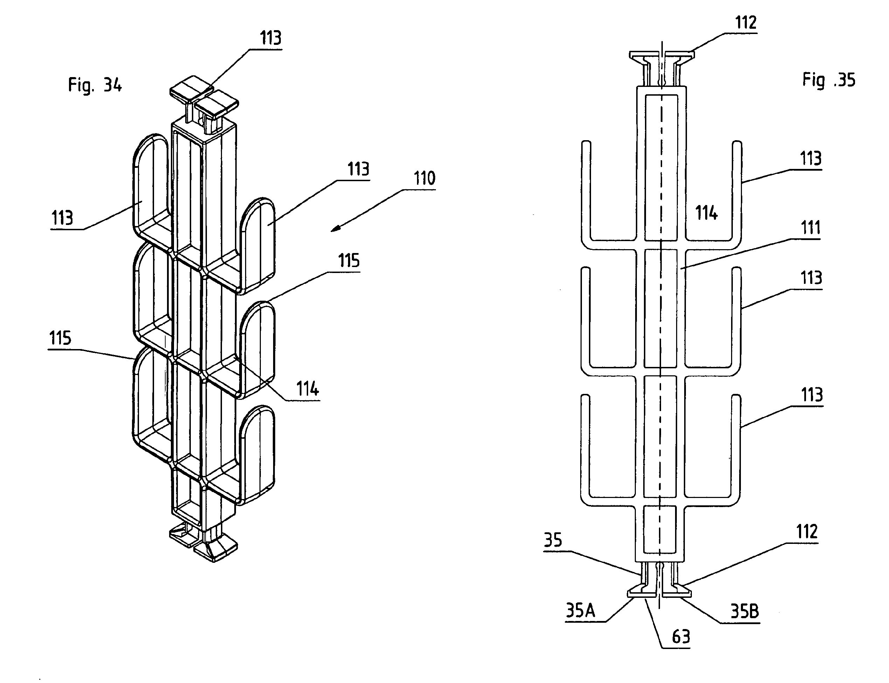

Fig. 34 shows a cable tree 110 in a perspective view that is provided for the taking up within spacing 29A between two adjacent crossbeams, namely upper and lower crossbeam 5 and 6. In the described embodiment said cable tree is formed by a longitudinally extended profiled link 111 that comprises a clamping shoe 112 respectively on its upper and lower end portion, said clamping shoe being formed there as a clamping shoe with a slot analog to the embodiment of a clamping shoe in-fig. 10 to 12. Clamping shoe 35 therefore comprises L-legs 35A and 35B that are separated from one another by a slot 62. A longitudinal side 63 formed by L-legs 35A and 35B is thereby longer than the width of slots 8 of crossbeams 5 and 6. Thereby a narrow side 64 is shorter than the width of said slot in said crossbeams. By insertion and rotation by 90° said cable tree is therefore to be easily mounted and fixed between said crossbeams.

For taking up cables, wires and the like said cable tree 110 comprises L-shaped support angles 113 that form together with a central profiled support link 111 U-shaped supports for inserting and holding cables and wires. Said supports are marked with 114. Respective support angles 113 are arranged in the described embodiment respectively on both sides of said profiled support link 111 and facing the same direction, meaning in three rows above one another for forming altogether six supports 114. Those are arranged on three different levels for guiding respective cable strands at different heights within spacing 29A of a partition wall element.

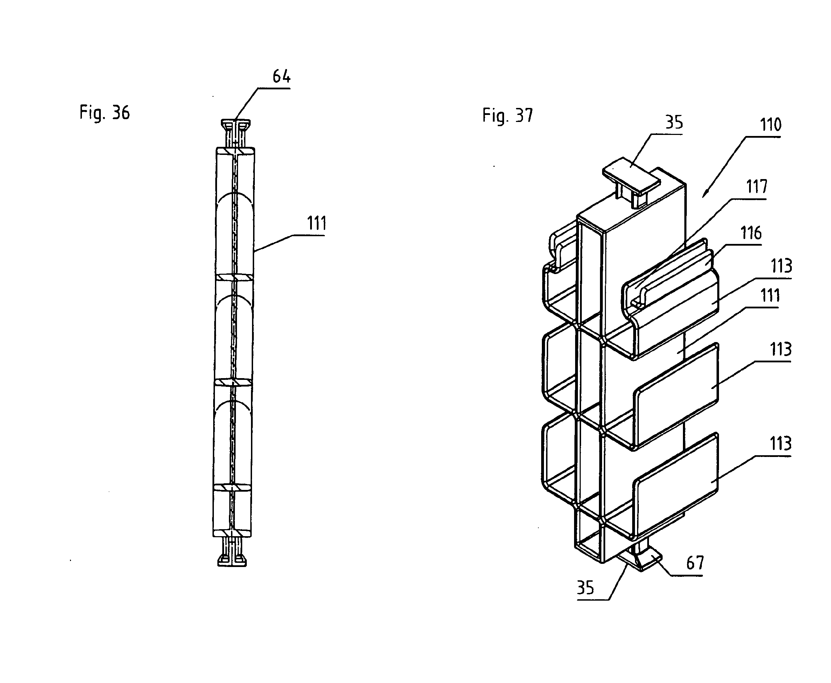

Fig. 37 shows a further embodiment of a cable tree that comprises an insert shoe on the upper and lower end portion of said longitudinally extended profiled link 111, said insert shoe being similar to an clamping shoe according to figures 13 to 15, therefore being slot-free, however, with a same narrow / longitudinal side configuration as a slotted clamping shoe and also comprising an inclined ramp 67 for clamping a cable tree inserted into a slot of a crossbeam 5 or 6 after a 90° rotation against downwardly protruding flanges 9 and 10 that are encasing slot 8 (cp. fig. 1). As a further amendment support angles are wider than support angles 113 in fig. 34, which also applies for support angles of the width of profiled link 111. Furthermore the upper end portion of angle elements 113 is contoured in a straight line and not with a curve 115 facilitating insertion of a cable, as it is the case in the embodiment according to fig. 34. Moreover, embodiment according to fig. 37 shows modified support angles 113 that are used for the upper row of supports 114 in the embodiment according to fig. 37. Said support angles 113 are provided in the upper range with an additional L-shape profiled side wall 116 for producing a narrow support channel 117 between said wall 116 and an opposite wall portion 118, said support channel being slightly inwardly offset. Said support channel 117 serves as support for special cables e.g. having a small diameter.

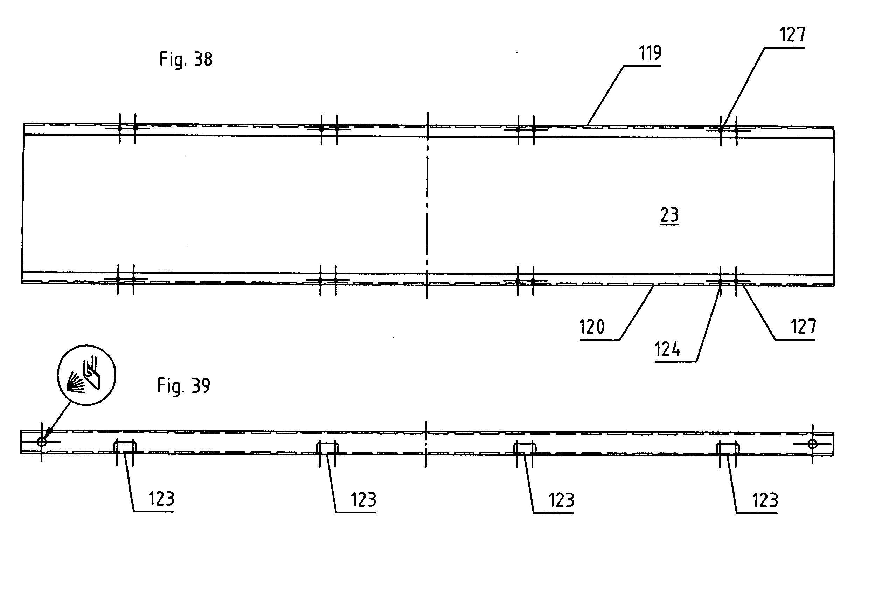

Fig. 38 to 63 show structure and fastening of a panel 23, which is shown in fig. 1 on the left side and serves for covering said spacing between upper and lower crossbeam 5 and 6. Obviously here the main surface of a panel 23 is flush with the left side surfaces of crossbeams 5 and 6 described in fig. 2. Said panel 23 closes in addition receptacle chamber 29 of a cable management system. Instead of inserting a panel 23, of course, also a cover 19 is optionally to be inserted from the left side for access to a cable management system.

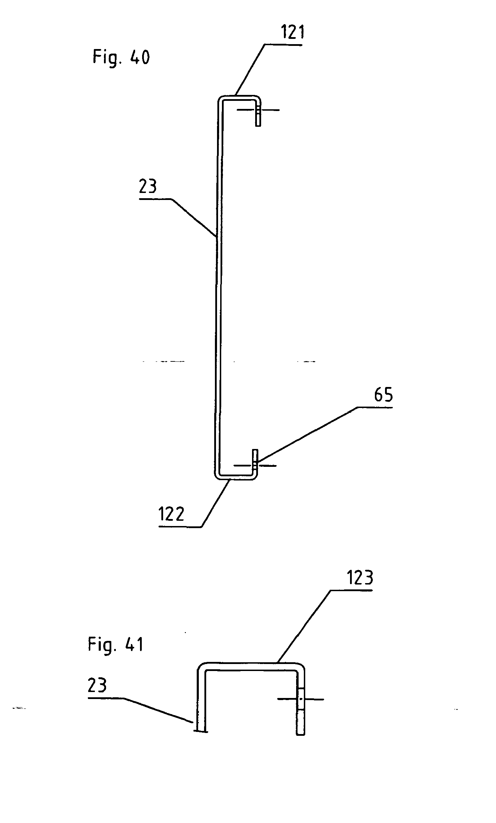

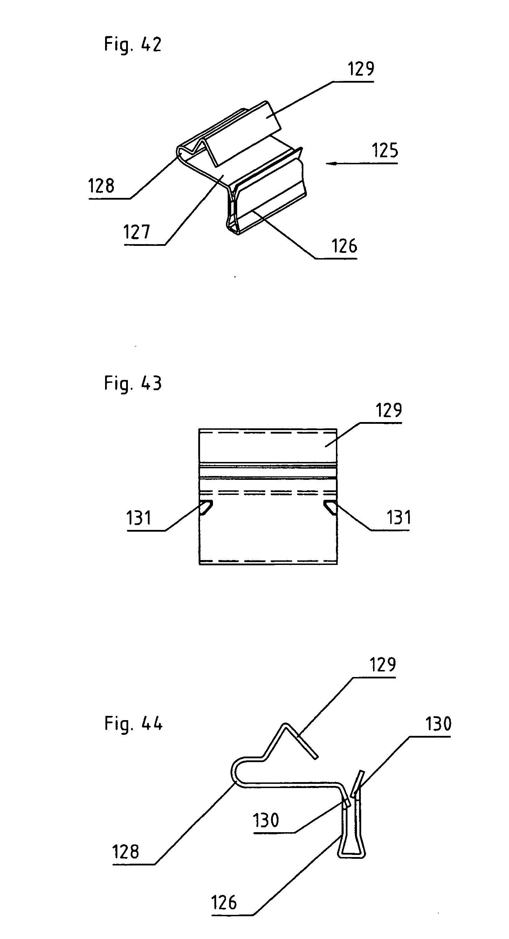

Panel 23 is folded in a U-shape on the upper and lower edge portion, as it is best seen in lateral view in fig. 40. Said U-shaped edge portions of a panel 23 are marked with 119 and 120. U-webs 121 and 122 are provided with openings 123 that are clearly obvious particularly in fig. 41, said openings serving for the fastening clips gripping through, said fastening clips being described in figures 42 to 45. A panel as shown in figures 38 and 39 is provided with altogether four openings 123 along the whole panel length on the upper and lower edge portion within the range of U-webs 121 and 122. Said openings 123 are congruently arranged with access openings 124 as seen in fig. 38 within the range of an outer U-leg of U-shaped edge portions 119 and 120, said openings serving for anchorage of fastening clips onto said panel, said fastening clips to be described in the following. From that it is clear that there are two openings 124 for each recess 123.

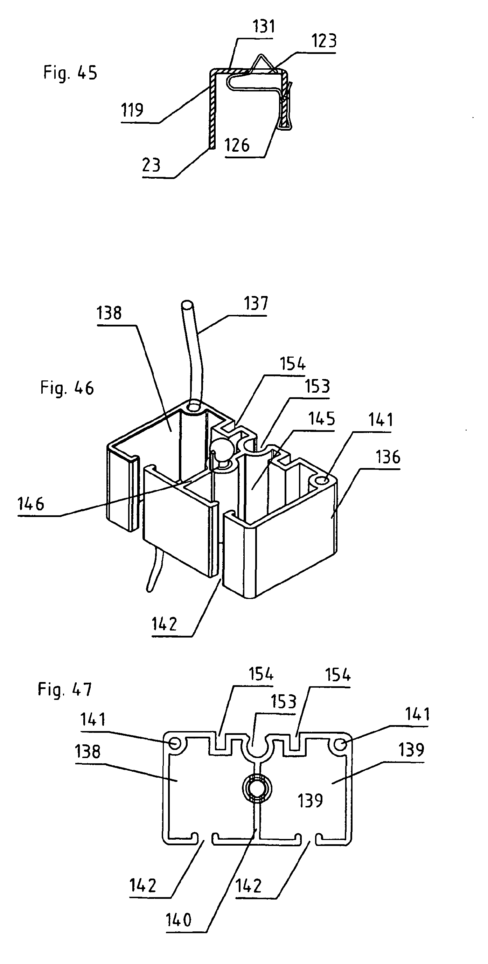

A fastening clip as described in fig. 42 comprises a folded clip pocket 126 that is adjacent to an offset web 127, said web finally fading via a U-shaped bent wall section 128 into a V-shaped fold protrusion 129. Said fastening clip 125, as it is best seen in fig. 45, is clipped from the bottom or from the top via outer U-legs of upper and lower edge portions 119 and 120, whereby the free end of said upper edge portion grips into said pocket 126. At the same time said V-shaped fold protrusion 129 reaches through opening 123 and protrudes upwards over said U-web 121 (cp. fig. 4b).

Nose-like protrusions 130 serve for fastening said fastening clips 125 on the upper and lower edge portion of panel 23, with said protrusions being seen best in fig. 44 and being formed by stamp cuts 131 (fig. 43) in both opposite walls of pocket 126 and then being bent inwards. Said stamp protrusions 130 are pointed according to fig. 43 and get caught in openings 124, when said fastening clip is being stuck on the free end of the edge portion of a panel. Like that fastenings clips are held tight, but at the same time detachably on panel 23.

For fastening panel 23 onto partition wall element 1, the upper and lower side of crossbeams 5 and 6 are provided with recesses 132, which are formed continuously along the length of said crossbeams and comprise the form of a V-shaped bead in the embodiment as described. When inserting panels 23, said V-shaped fold protrusions 129 clip into said V-shaped recesses 132 and are held there spring-biased. That provides for fast mounting of panels 23 that are held secure but detachable, if required, onto crossbeams 5 and 6. Therefore it is possible to take away panel 23 from its workspace without difficulty and replace it, if required, by a cover 19.

Fig. 46 shows a perspective view of a housing module 136 of a cable housing, which is generally marked with 135, said housing module being formed by sticking together modules 136. Flexible resin strands 137 preferably made of glass fibers serve for stabilization of a channel-like cable housing that is clipped together by modules 136.

A module 136 preferably made in one-piece of plastic comprises two channels 138 and 139 in the embodiment as described that are separated from one another by a cross web 140. Two corners of module 136 are provided with continuous openings 141, through which flexible plastic strands 137 are guided, as it is indicated for an opening 141 in fig. 46. Said clipped together modules 136 are lined up sort of bead-like onto both plastic strands 137 to form a cable guide housing.

Cables, cable strands and wires are inserted into a module by slots 142 that are provided on one side of said module, said slots also being formed continuously. Thereby respectively one slot refers to one channel 138 or 139 for inserting cables or the like easily from the side into both channels.

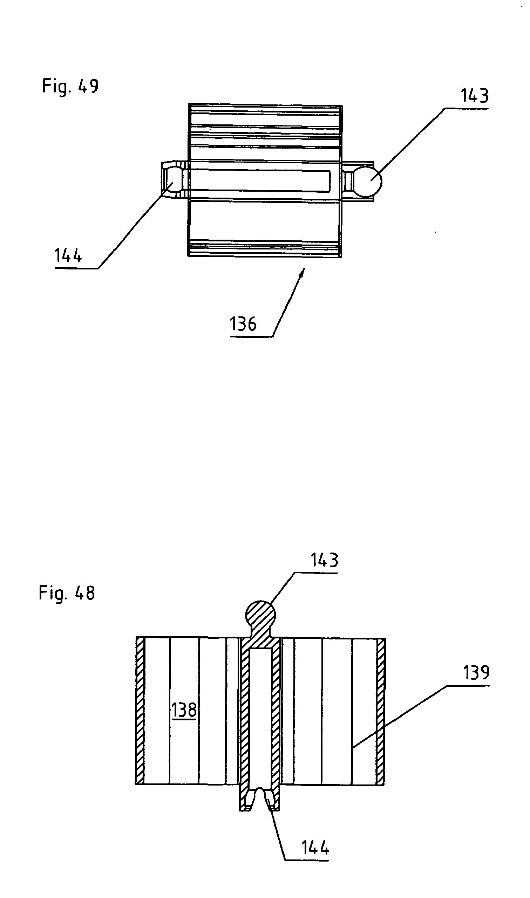

For the purpose of clipping modules together, every module comprises a one-piece spherical head 143 and a complementary insert socket 144 on the opposite side of said spherical head, whereby a thickened strand 145 is provided in the range of cross web 140, said strand having a circular diameter. As seen in fig. 48, said strand 145 is partially hollow. A certain flexibility for forming a clip lock, whereby said clip lock also comprises a protruding spherical head 143, therefore results in the range of said protruding insert socket 144.

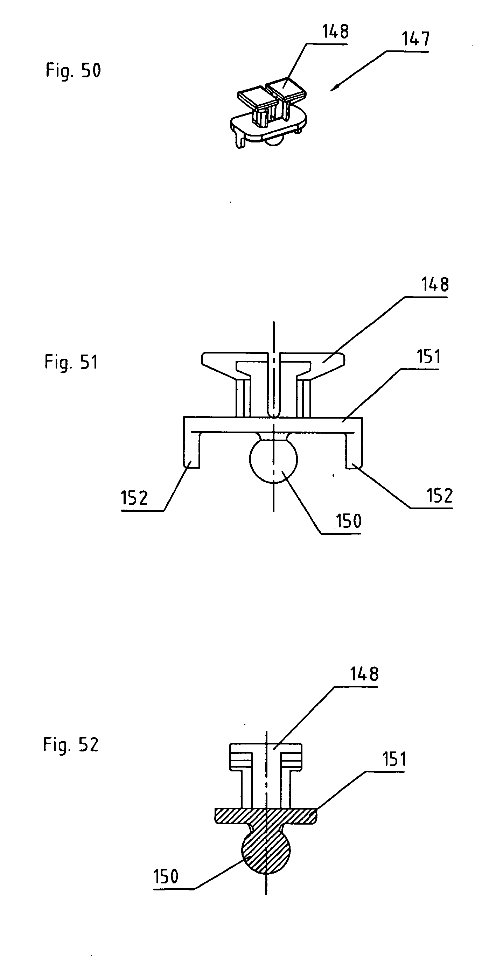

Fastening clips serve for fastening a cable housing on a partition wall element, meaning particularly on crossbeams, with said housing being stuck together through several modules, whereby an embodiment of such a fastening clip 147 is shown in fig. 50. Thereby said fastening clip comprises a clamping shoe 148, which is also separated into two parts due to a slot and basically complies with a clamping shoe according to e.g. figures 10 to 12. Said fastening clip 147 is therefore to be inserted into respective slots of a crossbeam. Therefore said crossbeams are particularly provided with wider slots 149 on the opposite side walls that are arranged vertically in said partition wall element, as it is seen in fig. 3. Said slots are similarly contoured as slots 8 of the upper and lower side of said crossbeams. Fastening clip 147 comprises a centrally arranged spherical head 150 on the side opposite to said clamping shoe 148, said spherical head being adjacent to a cross link 151. Furthermore, said cross link 151 also comprises wider clip-like projections 152 that are provided on the ends of cross link 151 in the described embodiment. That configuration of a central spherical head 150 and clip-like projections 152 arranged oppositely in line with said spherical head has its counterpart in module 136, as it is particularly seen in fig. 47. Therefore said module is provided with an insert socket 153 on the side opposite to slots 142, said insert socket being complementary to spherical head 150. Lock recesses 154 are positioned analog on both sides of insert socket 153, whereby the cross section of said lock recesses is complementary to those of said clip protrusion 152. However, lock recesses 154 and insert socket 153 of said module are continuously formed in longitudinal direction over the entire side wall for inserting respectively clipping a fastening clip according to fig. 50 at an optional height level into a clip configuration of a continuous insert socket 153 and recesses 154. For fastening a cable housing a fastening pin is therefore inserted into a crossbeam through a slot 149, rotated by 90° and clamped, whereby then a cable housing is to be clipped on through a module. Said module is then taken up perpendicularly to said crossbeam.

In a further formation, clip-like projections 152 are optionally adapted in their contour to the contour of said insert socket 153, e.g. by adapting the width of said clip-like protrusions 152 to the width of the insertion slot of said insert socket 153, for clipping on said module so to say also shifted by 90° and therefore parallel to said crossbeam. In that position both clip-like protrusions 152 and spherical head 150 grip into insert socket 153.

Figure 57 shows an embodiment of a housing module as a part of the cable housing to be clipped together, that serves for clamping cables guided within the cable housing. The housing module in figure 57 can, in addition to the other aforementioned modules, be clipped as a clamping element for cables in respectively between the cable housing, which is clipped together by several modules.

Housing module 136 comprises a clamping portion 170 displayed in figure 58, said clamping portion being inserted into a support portion 171 according to figure 59. Hereby clamping portion 170 already features the aforementioned clip elements on two opposite sides so that the clamping modules can be clipped together with modules according to figures 46 to 49. Clamping portion 170 comprises two clamping legs 172 and 173 that are respectively provided with two distanced clamping webs 174. Said clamping webs 174 act together with two partially cylindrical respectively bearing shell-like cable supports 175 provided within the support portion 171. Fastening the clamping portion 170 within the support portion 171 is effected by a screw 176 displayed in figure 57. Fastening clamping portion 170 with support portion 171 is effected by a screw 176 displayed in figure 57 that acts together with an expanding socket 177 provided on one of the outer surfaces of said support portion 171. Said expanding socket 177 serves for fastening housing module 136 in a slot of the crossbeam respectively post.

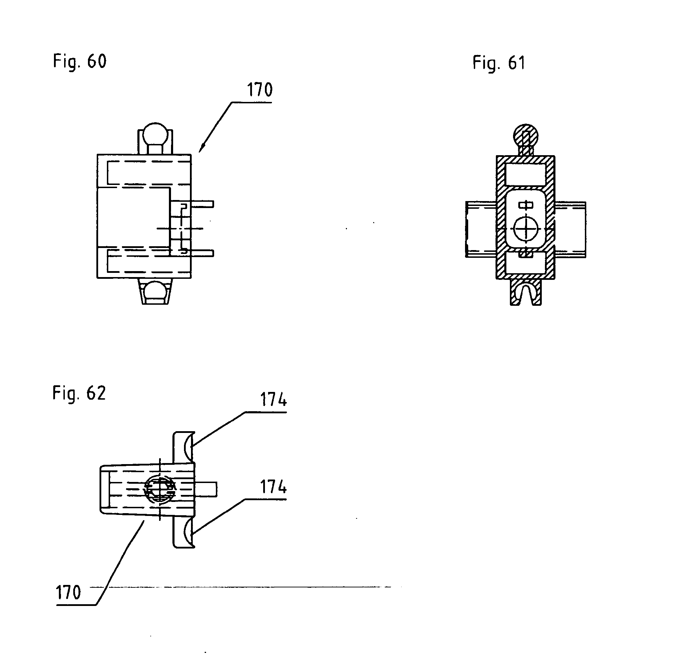

Further details result from figures 60 to 62 showing said clamping portion 170 in various views. Clamping webs 174 are clearly visible from figure 62. Furthermore, both the clip head as well as the clip socket are clearly visible from figure 61. Figures 65 to 64 show a support portion, whereby said expanding socket is clearly visible from figure 64. Said expanding socket is provided with slots according to figure 65 that can also be seen from figure 57 and it is marked with reference numeral 178. For assembling and mounting of cables e.g. two cables are inserted in bearing shells 175 respectively supports 175 and clamping portion 170 is then inserted into support portion 171. By tightening the screw 176 the cables are fixed by clamping webs 174 of clamping portion 170 within housing module 136 so that they are held tight within the module. By screwing in said screw 176 said expanding socket 177 expands so that housing module 136 can be fixed in the slots of the post respectively of the cross beam. Due to that the cable housing is mountable and demountable in any way. At the same time various arrangements of housing module 136 relative to the vertical line are possible.

Any appropriate material is to be used as material for the different elements of a cable management system. Particularly fastening clips, fastening clamps, cable trees and rotational fastening knobs are made of plastic, covers, panels and fastening cramps are made of metal, whereby panels and covers are cased, if required. Crossbeams and posts are preferably made of metal, particularly aluminium, produced by extrusion and comprising a multi-chamber profile in a cross section. Slots and recesses for fastening said clips and clamps are thereby formed in one piece with production of crossbeams and extend over the entire length of said crossbeams. Said crossbeams and posts comprise therefore a lightweight, however, at the same time a stiff and stable multi-functional structure.

## Claims

1. Cable management system for offices and the like, with partition wall elements, said partition wall elements being respectively formed from a supporting frame, said frame comprising posts (2, 3) and crossbeams (5, 6), said cross beams being interconnected with posts (2, 3) and forming receptacle rooms between one another for the cable management, said supporting frame being covered with wall panels (23) on at least one front surface, said wall panels outwardly covering the spacings of adjacent crossbeams (5, 6), said wall panels further being interconnected with posts (2, 3) and/or crossbeams (5, 6) preferably by fastening clips and forming the visible front surface of said partition wall element, **characterised in that** said system comprises at least one tray-like cover (19), said cover outwardly protruding over the front surface of said partition wall element, said cover having an upper panel flange (21), a lower panel flange (22) and a panel wall (20) and forming an additional receptacle chamber (29B) prefixed to the front surface of said partition wall element, said receptacle chamber (29B) outwardly enlarging said receptacle room (29) for the cable management, wherein said tray-like cover (19) is open on both sides and is bridging the spacing between crossbeams (5, 6), and wherein the free end of the lower panel flange of the cover is arranged in a distance to the adjacent side surface (28) of the lower crossbeam (6) for forming a cable guiding slot, and said cover (19) is tiltably linked onto a lower crossbeam with a tiltable joint interconnection and detachably interconnected in locking position with an upper crossbeam (6).

2. System according to claim 1 wherein said cover (19) is built in cross-section basically in a U-shape for forming a tray, meaning comprising a panel wall (20) provided on the lower and upper end portion with protruding panel flanges (21, 22) that form the U-legs of the tray, so that in locking position of said cover (19) the spacing (29A) between crossbeams (5, 6) for forming the receptacle room (29) is enlarged by a chamber (29B) encased by said protruding panel flanges (21, 22).

3. System according to claim 1 or 2 comprising an upper edge portion of the cover (19) being detachably interconnected with the upper crossbeam (5) via the upper panel flange (21).

4. System according to claim 3 wherein the interconnection is a clip-like interconnection.

5. System according to claim 4 wherein said upper crossbeam (5) is provided with at least two fastening clips (31) that are spaced at a distance to one another and wherein the upper panel flange (21) is to be clipped, preferably via a thickened portion (83) on the free end of the panel flange (21).

6. System according to claim 5 wherein said fastening clips (31) are fastened preferably detachably by use of clamping shoes (35) into a longitudinal slot (8) of the upper crossbeam (5).

7. System according to one of the previous claims wherein the lower panel flange of the cover is provided on its protruding free end with an end portion folded in U-shape (73) and wherein the upper panel flange (22) is provided with an inward offsetting (81), which is in alignment with the fold (73) of the lower panel flange (22), so that receptacles (84 and 85) for cable loops and the like are formed on the one hand between the offsetting (81) and the panel wall (20, 80) and on the other hand between the fold (73) and the panel wall (20, 80).

8. System according to one of the previous claims wherein the cover (19) is fastened on its lower edge portion by a fastening cramp (32) onto the lower crossbeam (6), which said fastening cramp is pivotally connected with the lower edge of the cover (19) and being fastened by a clamping element (33) with the lower crossbeam (6).

9. System according to claim 8, wherein the clamping element is a rotational fastening knob (33) having a grip element (68) and a clamping shoe (35).

10. System according to claim 8 or 9 comprising a fastening cramp with two spring clamps (57, 58) interconnected via a round collar (59A) and having outwardly offset pin- or bolt-like hinge protrusions (59) on their free ends, said protrusions gripping on the lower panel flange (22) into nose-like brackets (61), which have hinge eyes (60), for forming a tiltable hinge interconnection.

11. System according to claim 10 comprising a fastening cramp (32) fixedly clamped on the lower crossbeam (6) via a shoulder (70) of the clamping element (33) in the locking position of the clamping element.

12. System according to one of the previous claims comprising fastening clamps (41; 95) provided for detachably taking up connection elements, like plug-in connectors (37) and the like, said fastening clamps being provided with clamping shoes (43, 101) to be inserted and fastened into a longitudinal slot (8) of a crossbeam and the locking mechanism (49, 52; 97 to 99) being provided for the support of said connection elements.

13. System according to claim 12 comprising a locking mechanism formed by a clamp-like tiltable closure clamp (49) having a lock (53), by a spring clamp or spring bracket biased into said locking position, or by a locking band (97), being preferably formed by a Velcro band.

14. System according to one of the previous claims comprising said cover with at least one preferably two protruding cheeks (72) for slidably taking up the flaps (79) for enlarging the panel wall (20, 80) of the cover.

15. System according to claim 14 comprising housing frames (78), each provided with a guiding channel for slidably taking up one of said flaps (79), said housing frames (80) being connected to said cheeks (72) of the cover (19).

16. System according to claim 15 comprising said housing frame (78) with a casing wall (91) having several lock recesses (90) that cooperate with complementary lock protrusions (86, 94) on the flap (79) for the purpose of a step-by-step adjustment of the flaps (79).

17. System according to claim 16 comprising said flaps (79) with longitudinally extending or punctual lock protrusions (86; 94) being arranged in at least one row and at equal distances to one another.

18. System according to one of the previous claims comprising a cable tree (110) with several supports (114) for cables, wires and the like, whereby said cable tree is to be inserted between the lower and the upper adjacent crossbeam (5, 6).

19. System according to claim 18 comprising said cable tree (110) with clamping shoes (35) on both ends for fastening on the crossbeams (5, 6).

20. System according to claim 18 or 19 wherein said cable tree (110) is formed by a longitudinal profiled link (111), on which the supports (114) are arranged on both sides and/or in different height levels to one another.

21. System according to claim 20 comprising said supports (114) formed by preferably L-shaped support angles (113) being connected to the cable tree, whereby said angle elements respectively form a U-shaped support (114) together with the longitudinal link (111).

22. System according to claim 21 wherein the upper ends of the support angles (113) are provided with a curved edge (115).

23. System according to one of the previous claims comprising panels (23) for covering the spacing between the adjacent crossbeams (5, 6) that are formed by edge portions folded in U-shape (119, 120) on their upper and lower edge as well as having openings (123) in the U-legs of the edge portions (119, 120), as well as by fastening clips (125) having a clip pocket (126), with said clips having a resilient fold protrusion (129), whereby the said fold protrusion protrudes outwardly through said opening (123) after being clipped via the clip pocket (126) to the free leg of one of the edge portions (119, 120), so that the panel is to be clipped into complementary groove-like recesses (132) in the crossbeam due to said resilient fold protrusions (129).

24. System according to claim 23 comprising said fastening clip (125) with lock protrusions (130) in the area of the clip pocket (126), with said protrusions gripping into respective openings (124) in the free U-leg of the edge portions (119, 120) for detachably fastening the clip onto the panel (23).

25. System according to one of the previous claims comprising a flexible cable housing (135) formed by housing modules (136) to be clipped together into a row.

26. System according to claim 25 wherein said cable housing (135) is detachably fastened by at least one fastening clip (147) onto the partition wall element (1), in particular onto the crossbeam.

27. System according to claim 26 wherein said fastening clip (147) is to be clipped together via a clip interconnection with a module (136) of the cable housing.

28. System according to claim 25 or 26 comprising said fastening clip (147) with a lock head (150) preferably formed by a spherical element and further comprising said module (136) with a respective insert socket (153) on a side wall.

29. System according to claim 28 comprising said fastening clip (147) with additional lock protrusions (152), preferably two lock protrusions (152), which are aligned opposite to one another in respect of the lock head (150), and which are preferably aligned in line with the lock head (150) and which cooperate as a clip interconnection together with the module (136), which is provided with respective complementary lock recesses (153, 154) on one side surface for this clip interconnection.

30. System according to claim 29 wherein lock recesses (153, 154) are formed continuously over the length of the side surface of the module (136).

31. System according to one of the claims 25 to 30 wherein said modules (136) provide a lock head (143) preferably formed by a sphere on the one frontal end and a complementary insert socket (144) for sticking the modules together into a row on the other frontal surface to form the cable housing.

32. System according to one of the claims 25 to 31 wherein said module (136) is formed by a hollow section with two adjacent receptacle chambers (138, 139) that are separated by a cross web (140), whereby the lock head (143) and the insert socket (144) are formed in the central area of the cross web (140).

33. System according to claim 32 comprising said module with two continuous slots (142) extending over the side surface for guiding the cables, whereby respectively one slot is for one of the two receptacle chambers (138, 139).

34. System according to one of the claims 25 to 33 wherein each module (136) has several preferably two distanced access openings (141) for sticking the modules onto flexible resin strands (137) to stabilize the cable housing (135).

35. System according to one of the claims 25 to 34 wherein housing module (136) for clamping therein guided cables is provided with a clamping portion (170), which is insertable into a support portion (171) of said housing module and provided with clamping elements.

36. System according to claim 35 wherein said clamping element features two clamping legs (172, 173) that are provided with clamping webs (174) and act together with corresponding cable supports (175) of support portion (171).

37. System according to claim 35 or 36 wherein support portion (171) is provided with an expanding socket (177) for clamping the housing module into a slot of a post or crossbeam, said socket being expandable by a screw (176) fastening the clamping portion (170) onto the support portion (171).

38. System according to one of the previous claims wherein said clamping shoe (35, 43, 101, 112, 148) are formed in multi-parts by at least one slot preferably as a two-part clamping shoe, or are formed as a one-part insert shoe (43).

39. System according to claim 38 wherein said clamping shoe (35, 43, 101, 112, 148) is formed by a fastening shaft (69) and an enlarged shoe part which is connected with the fastening shaft (69) through bilaterally formed, ramp-like inclined surfaces (67).

40. System according to claim 38 or 39 comprising said clamping shoe with a narrow side (64) particularly in the area of the enlarged shoe part, said narrow side being narrower than the width of the slot (8) in the crossbeams (5, 6), and a longitudinal side (63), which is longer than the width of the longitudinal slot (8), so that the clamping shoe (35, 43, 101, 112, 148) is to be inserted via the narrow side into the longitudinal slot (8) of the crossbeam (5, 6) and is held after rotation within the slot (8) by the clamping shoe respectively the enlarged shoe part that is gripping behind the slot (8) with its longitudinal sides (63).

41. System according to one of the previous claims wherein said crossbeams are formed by a longitudinally extended beam with hollow section with four rectangular side walls, with said crossbeams having slots (8, 18, 149) in at least two opposite side walls for taking up fastening elements, particularly for taking up clamping shoes.

42. System according to claim 41 wherein said slots (8, 18) are formed by inwardly offset panel flanges (9, 10), with their free ends forming stop shoulders (11) for the gripping of the clamping shoes and the like.

43. System according to claim 41 or 42 comprising said crossbeams with lock recesses (129) on at least two opposite sides for fastening the panels (23), with said lock recesses being preferably formed as V-shaped beads.

44. System according to one of the claims 41 to 43 wherein the crossbeams have a multichamber profile in the cross section and are made of extruded metal, in particular aluminium.

## Patentansprüche

1. Kabelmanagementsystem für Büros und dergleichen, mit Trennwandelementen, welche jeweils aus einem tragenden Rahmen gebildet sind, der aus Ständern (2,3) und Querbalken (5,6) aufgebaut ist, wobei die Querbalken mit den Ständern (2,3) verbunden sind und zwischen sich Aufnahmeräume für das Kabelmanagementsystem bilden, wobei der tragende Rahmen an mindestens einer Frontseite mit Wandpaneelen (23) verkleidet ist, welche die Zwischenräume benachbarter Querbalken (5,6) nach außen hin abdecken, wobei die Wandpaneele des Weiteren mit Ständern (2,3) und/oder Querbalken (5, 6) vorzugsweise durch Befestigungsclipse verbunden sind und die Sichtverkleidung des Trennwandelements bilden, **dadurch gekennzeichnet dass** das System zumindest eine trayartige Abdeckung (19) aufweist, die nach außen über die Frontseite des Trennwandelements vorsteht, wobei die Abdeckung einen oberen Paneelflansch (21), einen unteren Paneelflansch (22) und eine Paneelwand (20) aufweist und eine zusätzliche, der Frontseite des Trennwandelements vorgesetzte Aufnahmekammer (29B) bildet, wobei die Aufnahmekammer (29B) den Aufnahmeraum (29) für das Kabelmanagement nach außen hin vergrößert, wobei die trayartige Abdeckung (19) an beiden Seiten offen ist und den Zwischenraum zwischen Querbalken (5,6) überbrückt, und wobei das freie Ende des unteren Paneelflansches der Abdeckung mit einem Abstand zu der benachbarten Seitenfläche (28) des unteren Querbalkens (6) zur Bildung eines Kabeldurchführungsschlitzes angeordnet ist, und die Abdeckung (19) an einem unteren Querbalken mit einer Klappgelenkverbindung klappbar angelenkt und in Schließstellung mit einem oberen Querbalken (6) lösbar verbunden ist.

2. System nach Anspruch 1, **dadurch gekennzeichnet, dass** die Abdeckung (19) im Querschnitt im Wesentlichen U-förmig zur Bildung eines Trays aufgebaut ist, d.h. eine Paneelwand (20) aufweist, die an dem unteren und dem oberen Endabschnitt mit vorstehenden Paneelflanschen (21, 22) versehen ist, die die U-Schenkel des Trays bilden, so dass in Schließstellung der Abdeckung (19) der Zwischenraum (29A) zwischen Querbalken (5, 6) zur Bildung des Aufnahmeraums (29), um den durch die vorstehenden Paneelflansche (21, 22) eingeschlossenen Raum (29B) erweitert ist.

3. System nach Anspruch 1 oder 2, **dadurch gekennzeichnet, dass** die Abdeckung (19) an ihrem oberen Rand über den oberen Paneelflansch (21) lösbar mit dem oberen Querbalken (5) verbindbar ist.

4. System nach Anspruch 3, **dadurch gekennzeichnet, dass** die Verbindung eine clipartige Verbindung ist.

5. System nach Anspruch 4, **dadurch gekennzeichnet, dass** am oberen Querbalken (5) mindestens zwei mit einem Abstand zueinander angeordnete Befestigungsclipse (31) vorgesehen sind, in welche der obere Paneelflansch (21) einclipsbar ist, vorzugsweise über einen verdickten Abschnitt (83) an dem freien Ende des Paneelflansches (21).

6. System nach Anspruch 5, **dadurch gekennzeichnet, dass** die Befestigungsclipse (31) in einem Längsschlitz (8) des oberen Querbalkens (5) vorzugsweise durch Klemmschuhe (35) lösbar befestigt sind.

7. System nach einem der vorhergehenden Ansprüche, **dadurch gekennzeichnet, dass** der untere Paneelflansch der Abdeckung an seinem vorstehenden freien Ende mit einem U-förmig gefalzten Endabschnitt (73) versehen ist, dass der obere Paneelflansch (22) in Ausrichtung mit dem Falz (73) des unteren Paneelflansches (22) eine Abkröpfung (81) nach innen aufweist, so dass zwischen der Abkröpfung (81) und der Paneelwand (20, 80) einerseits und dem Falz (73) und der Paneelwand (20, 80) andererseits Aufnahmen (84 und 85) für Kabelschlingen und dergleichen gebildet sind.

8. System nach einem der vorhergehenden Ansprüche, **dadurch gekennzeichnet, dass** die Abdeckung (19) an ihrem unteren Randabschnitt durch eine Befestigungsspange (32) an dem unteren Querbalken (6) befestigt ist, welche mit dem unteren Rand der Abdeckung (19) gelenkig verbunden und durch ein Klemmelement (33) mit dem unteren Querbalken (6) befestigbar ist.

9. System nach Anspruch 8, **dadurch gekennzeichnet, dass** das Klemmelement durch einen Drehbefestigungsknopf (33) gebildet ist, der ein Griffelement (68) und einen Klemmschuh (35) aufweist.

10. System nach Anspruch 8 oder 9, umfassend eine Befestigungsspange mit zwei Federbügeln (57, 58), die durch einen Rundbügel (59A) miteinander verbunden sind und an ihren freien Enden nach außen abkragende stift- oder bolzenartige Gelenkfortsätze (59) aufweisen, welche in nasenartige und mit Gelenköffnungen (60) versehene Laschen (61) an dem unteren Paneelflansch (22), zur Bildung einer Klappgelenkverbindung eingreifen.

11. System nach Anspruch 10, umfassend, eine Befestigungsspange (32), die in der Schließstellung des Klemmelementes über eine Schulter (70) des Klemmelementes (33) fest an dem unteren Querbalken (6) geklemmt ist.

12. System nach einem der vorhergehenden Ansprüche, umfassend Befestigungsklammern (41, 95) zur lösbaren Aufnahme von Anschlusselementen, wie Stromdosen (37) und dgl. vorgesehen sind, wobei die Befestigungsklammern mit Klemmschuhen (43, 101) versehen sind, um in einen Längsschlitz (8) eines Querbalkens geführt und befestigt zu werden und der Schließmechanismus (49, 52; 97 bis 99) für die Halterung der Anschlusselemente vorgesehen ist.

13. System nach Anspruch 12, umfassend einen Schließmechanismus, der durch einen klammerartigen und mit einer Raste (53) versehenen Klappschließbügel (49) durch eine in Schließstellung vorgespannte Federklemme oder Federbügel oder durch ein Schließband (97) gebildet ist, welches vorzugsweise durch einen Klettverschluss ausgebildet ist.

14. System nach einem der vorhergehenden Ansprüche, umfassend die Abdeckung mit zumindest einer, vorzugsweise zwei vorstehenden Wangen (72) für die verschiebbare Aufnahme von die Paneelwand (20, 80) der Abdeckung verbreiternden Flügeln (79).

15. System nach Anspruch 14, umfassend Gehäuserahmen (78), jeder mit einem Führungskanal für die verschiebbare Aufnahme eines der Flügel (79) versehen, wobei die Gehäuserahmen (80) mit den Wangen (72) der Abdeckung (19) verbunden sind.

16. System nach Anspruch 15, umfassend den Gehäuserahmen (78) mit einer Gehäusewand (91) mit mehreren Rastausnehmungen (90), die zur stufenweisen Verstellung der Flügel (79) mit komplementären Rastvorsprüngen (86, 94) an den Flügeln (79) zusammenwirken;

17. System nach Anspruch 16, umfassend die Flügel (79) mit langgestreckten oder punktuellen Rastvorsprüngen (86; 94), die in mindestens einer Reihe und zueinander gleichmäßig beabstandet angeordnet sind.

18. System nach einem der vorhergehenden Ansprüche, umfassend einen Kabelhaltebaum (110) mit mehreren Aufnahmen (114) für Kabel, Leitungen und dgl., wobei der Kabelhaltebaum zwischen dem unteren und dem oberen benachbarten Querbalken (5, 6) einsetzbar ist.

19. System nach Anspruch 18, umfassend den Kabelbaum (110), der zur Befestigung an den Querbalken (5, 6) an beiden Enden mit Klemmschuhen (35) versehen ist.

20. System nach Anspruch 18 oder 19, **dadurch gekennzeichnet, dass** der Kabelbaum (110) durch eine langgestreckte Profilleiste (111) gebildet ist, an der die Aufnahmen (114) beidseitig und/oder in unterschiedlichen Höhenniveaus zueinander angeordnet sind.

21. System nach Anspruch 20, umfassend die Aufnahmen (114), die durch vorzugsweise L-förmige und an dem Kabelbaum befestigte Stützwinkel (113) gebildet sind, wobei die Winkelelemente zusammen mit der langgestreckten Leiste (111)jeweils eine U-förmige Aufnahme (114) bilden.

22. System nach Anspruch 21, **dadurch gekennzeichnet, dass** die oberen Enden der Stützwinkel (113) mit einer Rundung (115) versehen sind.

23. System nach einem der vorhergehenden Ansprüche, umfassend Paneele (23) zur Abdeckung des Zwischenraums zwischen benachbarten Querbalken (5, 6), die an ihrem oberen und unteren Rand mit U-förmig gefalzten Randabschnitten (119, 120) ausgebildet sowie in den U-Stegen der Randabschnitte (119, 120) mit Öffnungen (123) versehen sind, sowie durch mit einer Cliptasche (126) versehene Befestigungsclipse (125), die mit einem elastisch federnden Falzvorsprung (129) versehen sind, der nach Aufclipsen der Cliptasche (126) auf dem freien Schenkel eines der Randabschnitte (119, 120) durch die Öffnung (123) nach außen vorsteht, derart, dass das Paneel mittels der federnden Falzvorsprünge (129) in komplementär ausgebildete nutartige Ausnehmungen (132) in den Querbalken einclipsbar ist.

24. System nach Anspruch 23, umfassend den Befestigungsclip (125) der im Bereich der Cliptasche (126) Rastvorsprünge (130) aufweist, die in entsprechende Öffnungen (124) im freien U-Schenkel der Randabschnitte (i i 9, 120) zur lösbaren Befestigung des Clip am Paneel (23) eingreifen.

25. System nach einem der vorhergehenden Ansprüche, umfassend ein flexibles Kabelgehäuse (135), welches aus miteinander in einer Reihe verclipsbaren Gehäusemodulen (136) gebildet ist.

26. System nach Anspruch 25, **dadurch gekennzeichnet, dass** das Kabelgehäuse (135) durch mindestens einen Befestigungsclip (147) am Trennwandelement (1), insbesondere am Querbalken, lösbar befestigbar ist.

27. System nach Anspruch 26, **dadurch gekennzeichnet, dass** der Befestigungsclip (147) über eine Clipverbindung mit einem Modul (136) des Kabelgehäuses verclipsbar ist.

28. System nach Anspruch 25 oder 26, umfassend den Befestigungsclip (147) mit einem vorzugsweise als Kugelelement ausgebildeten Rastkopf (150) und weiter umfassend das Modul (136) mit einer entsprechenden Steckbuchse (153) an einer Seitenwand.

29. System nach Anspruch 28, umfassend den Befestigungsclip (147) mit weiteren Rastvorsprüngen (152), vorzugsweise zwei einander bezüglich des Rastkopfs (150) gegenüberliegend angeordneten Rastvorsprüngen (152), die bevorzugt in einer Linie mit dem Rastkopf (150) ausgerichtet sind und als Clipverbindung mit dem Modul (136) zusammenwirken, welcher für diese Clipverbindung an einer Seitenfläche entsprechende komplementäre Rastausnehmungen (153, 154) aufweist.

30. System nach Anspruch 29, **dadurch gekennzeichnet, dass** die Rastausnehmungen (153, 154) über die Länge der Seitenwand des Moduls (136) durchgehend ausgebildet sind.

31. System nach einem der Ansprüche 25 bis 30, **dadurch gekennzeichnet, dass** die Module (136) an einem stirnseitigen Ende mit einem vorzugsweise als Kugel ausgebildeten Rastkopf (143) und am anderen stirnseitigen Ende mit einer komplementären Steckbuchse (144) zum zusammenstecken der Module in Reihe zur Bildung des Kabelgehäuses versehen sind.

32. System nach einem der Ansprüche 25 bis 31, **dadurch gekennzeichnet, dass** das Modul (136) durch ein Hohlprofil mit zwei benachbarten und durch einen Quersteg (140) getrennten Auf nahmekamrnern (138, 139) gebildet ist, wobei der Rastkopf (143) und die Steckbuchse (144) im zentralen Bereich des Querstegs (140) ausgebildet sind.

33. System nach Anspruch 32, **dadurch gekennzeichnet, dass** das Modul zwei über die Seitenwand durchgehende Schlitze (142) für die Kabelzuführung aufweist, wobei jeweils ein Schlitz einer der beiden Aufnahmekammern (138, 139) zugeordnet ist.

34. System nach einem der Ansprüche 25 bis 33, **dadurch gekennzeichnet, dass** jedes Modul (136) zur Stabilisierung des Kabelgehäuses (135) mehrere und zwar vorzugsweise zwei beabstandete Durchgangsöffnungen (141) zur Auffädelung der Module auf flexiblen Kunststoffsträngen (137) aufweist.

35. System nach einem der Ansprüche 25 bis 34, **dadurch gekennzeichnet, dass** das Gehäusemodul (136) zum Festklemmen von darin geführten Kabeln mit einem Klemmteil (170) versehen ist, welches in ein Aufnahmeteil (171) des Gehäusemoduls einsetzbar und mit Klemmelementen versehen ist.

36. System nach Anspruch 35, **dadurch gekennzeichnet, dass** das Klemmelement zwei Klemmschenkel (172, 173) aufweist, die mit Klemmstegen (174) versehen sind und mit entsprechenden Kabelaufnahmen (175) des Aufnahmeteils (171) zusammenwirken.

37. System nach Anspruch 35 oder 36, **dadurch gekennzeichnet, dass** das Aufnahmeteil (171) mit einer Spreizbuchse (177) für die Festklemmung des Gehäusemoduls in einem Schlitz eines Ständers oder Querbalkens versehen ist, die durch eine Schraube (176) aufweitbar ist, welche das Klemmteil (170) am Aufnahmeteil (171) befestigt.

38. System nach einem der vorhergehenden Ansprüche, **dadurch gekennzeichnet, dass** der Klemmschuh (35, 43, 101, 112, 148) durch mindestens einen Schlitz mehrteilig, vorzugsweise zweiteiliger Klemmschuh, oder als einteiliger Steckschuh (43) ausgebildet ist.

39. System nach Anspruch 38, **dadurch gekennzeichnet, dass** der Klemmschuh (35, 43, 101, 112, 148) aus einem Befestigungsschaft (69) und einem daran über beidseitig ausgebildete, rampenartige Schrägflächen (67) anschließenden verbreiteten Schuhteil gebildet ist.

40. System nach Anspruch 38 oder 39, umfassend den Klemmschuh der insbesondere in dem Bereich des verbreiteten Schuhteiis eine Schmalseite (64) aufweist, die schmäler als die Breite des Schlitzes (8) in dem Querbalken (5, 6) ist und eine Längsseite (63) aufweist, deren Länge größer als die Breite des Längsschlitzes (8) ist, derart, dass der Klemmschuh (35, 43, 101, 112, 148) über die Schmalseite in den Längsschlitz (8) des Querbalkens (5, 6) einführbar und nach Drehung innerhalb des Schlitzes (8) durch den den Schlitz (8) mit den Längsseiten (63) hintergreifenden Klemmschuh bzw. verbreiteten Schuhteil gehalten ist.

41. System nach einem der vorhergehenden Ansprüche, **dadurch gekennzeichnet, dass** die Querbalken aus einem langgestrecktem Hohlprofil mit vier rechtwinkligen Seitenwänden gebildet sind und mindestens in zwei gegenüberliegenden Seitenwänden Schlitze (8, 18, 149) für die Aufnahme von Befestigungselementen, insbesondere für die Aufnahme von Klemmschuhen aufweisen.

42. System nach Anspruch 41, **dadurch gekennzeichnet, dass** die Schlitze (8, 18) durch nach innen abkragende Paneelflansche (9, 10) gebildet sind, deren freie Enden Anschlagschultern (11) für die Hintergreifung durch die Klemmschuhe und dgl. bilden.

43. System nach Anspruch 41 oder 42, **dadurch gekennzeichnet, dass** die Querbalken an mindestens zwei gegenüberliegenden Seiten Rastausnehmungen (129) für die Befestigung der Paneele (23) aufweisen, die vorzugsweise als V-förmige Sicken ausgebildet sind.

44. System nach einem der Ansprüche 41 bis 43, **dadurch gekennzeichnet, dass** die Querbalken im Querschnitt ein Mehrkammerprofil aufweisen und aus extrudiertem Metall, insbesondere Aluminium hergestellt sind.

## Revendications

1. Système de gestion de câblage destiné à des bureaux et analogues, doté d'éléments de paroi de séparation, lesdits éléments de paroi de séparation étant formés, respectivement, d'une structure de support, ladite structure comportant des montants (2, 3) et des traverses (5, 6), lesdites traverses étant interconnectées avec des montants (2, 3) et formant, entre l'une et l'autre, des espaces de logement destinés à la gestion du câblage, ladite structure de support étant recouverte de panneaux de paroi sur au moins une surface frontale, lesdits panneaux de paroi recouvrant extérieurement les espacements entre les traverses adjacentes (5, 6), lesdits panneaux de paroi étant, de plus, interconnectés avec des montants (2, 3) et/ou des traverses (5, 6), de préférence, par des pièces de fixation et formant la surface frontale visible dudit élément de paroi de séparation, **caractérisé en ce que** ledit système comporte au moins un élément de recouvrement de type plateau (19), ledit élément de recouvrement faisant saillie vers l'extérieur sur la surface avant dudit élément de paroi de séparation, ledit élément de recouvrement comportant un rebord de panneau supérieur (21), un rebord de panneau inférieur (22) et une paroi de panneau (20) et formant une chambre de logement supplémentaire (29B) préfixée sur la surface avant dudit élément de paroi de séparation, ladite chambre de logement (29B) agrandissant vers l'extérieur ledit espace de logement (29) destiné à la gestion de câblage, dans lequel ledit élément de recouvrement de type plateau (19) est ouvert sur les deux côtés et enjambe l'espacement entre les traverses (5,6) et dans lequel l'extrémité libre du rebord de panneau inférieur de l'élément de recouvrement est agencé selon une certaine distance à la surface latérale adjacente (28) de la traverse inférieure (6) en vue de former une fente de guidage de câble, et dans lequel ledit élément de recouvrement (19) est relié de façon à pivoter sur une traverse inférieure présentant une interconnexion par une jonction à pivotement et interconnecté de façon amovible en position de verrouillage avec une traverse supérieure (5).

2. Système selon la revendication 1 dans lequel ledit élément de recouvrement (19) est construit avec une section transversale fondamentalement configurée en U en vue de former un plateau, ce qui signifie de comporter une paroi de panneau (20) prévue sur la partie d'extrémité inférieure et supérieure avec des rebords de panneau en saillie (21, 22) qui constituent les branches du U du plateau, de sorte qu'en position de verrouillage dudit élément de recouvrement (19) l'espacement (29A) compris entre les traverses (5, 6) pour former la zone de logement (29) est agrandi par une chambre (29B) entourée par lesdits rebords de panneaux en saillie (21, 22).

3. Système selon la revendication 1 ou 2 comprenant une partie de bordure supérieure de l'élément de recouvrement (19) interconnectée de façon amovible avec la traverse supérieure (5) par l'intermédiaire du rebord de panneau supérieur (21).

4. Système selon la revendication 3 dans lequel l'interconnexion est une interconnexion de type à pince.

5. Système selon la revendication 4 dans lequel ladite traverse supérieure (5) est pourvue d'au moins deux pinces de fixation (31) qui sont espacées d'une certaine distance l'une de l'autre et dans lequel le rebord de panneau supérieur (21) doit être fixé par pince, de préférence par l'intermédiaire d'une partie en sur épaisseur (83) présente sur l'extrémité libre du rebord de panneau (21).

6. Système selon la revendication 5 dans lequel les pinces de fixation (31) sont fixées de préférence de façon détachable par l'emploi de patins de serrage (35) dans une fente longitudinale (8) de la traverse supérieure (5).

7. Système selon l'une des revendications précédentes, dans lequel le rebord de panneau inférieur de l'élément de recouvrement est doté, sur son extrémité libre faisant saillie, d'une partie d'extrémité repliée suivant une configuration en U (73) et dans lequel le rebord de panneau supérieur (22) est prévu avec un décalage vers l'intérieur (81), lequel se trouve en alignement avec le repli (73) du rebord de panneau inférieur (22), de sorte que les logements (84 et 85) destinés aux boucles de câblage et analogues sont formés, d'une part entre la partie de décalage (81) et la paroi de panneau (20, 80) et, d'autre part, entre le repli (73) et la paroi de panneau (20, 80).

8. Système selon l'une des revendications précédentes dans lequel l'élément de recouvrement (19) est fixé sur sa partie de bordure inférieure par un crampon de fixation (32) sur la traverse inférieure (6), lequel dit crampon de fixation est raccordé de façon à pivoter avec le bord inférieur de l'élément de recouvrement (19) et fixé par un élément de serrage (33) à la traverse inférieure (6).

9. Système selon la revendication 8, dans lequel l'élément de serrage est un bouton de fixation à rotation (33) comportant un élément de prise (68) et un patin de serrage (35).

10. Système selon la revendication 8 ou 9 comprenant un crampon de fixation doté de deux pinces à ressort (57, 58) interconnectées par l'intermédiaire d'un collier rond (59A) et comportant des saillies d'articulation de type à boulon ou à broche décalées vers l'extérieur (59) sur leurs extrémités libres, lesdites saillies se fixant sur le rebord de panneau inférieur (22) dans des supports en forme de bec (61) qui comportent des oeillets d'articulation (60), en vue de former une interconnexion par articulation à pivotement.

11. Système selon la revendication 10 comprenant un crampon de fixation (32) serré de façon fixe sur la traverse inférieure (6) par l'intermédiaire d'un épaulement (70) de l'élément de serrage (33) dans la position de verrouillage de l'élément de serrage.

12. Système selon l'une des revendications précédentes comprenant des étriers de fixation (41 ; 95) prévus pour maintenir de façon détachable des éléments de connexion, tels que des connecteurs enfichables (37) et analogues, lesdits étriers de fixation étant dotés de patins de fixation (43, 101) en vue d'être insérés et fixés dans une fente longitudinale (8) d'une traverse et le mécanisme de verrouillage (49, 52 ; 97 à 99) étant fourni pour le support desdits éléments de connexion.

13. Système selon la revendication 12 comprenant un mécanisme de verrouillage formé par une pince de fermeture pouvant pivoter de type étrier de serrage (49) comportant un verrou (53), par une pince à ressort ou une main de ressort rappelée dans ladite position de verrouillage, ou par une bande de verrouillage (97), formée, de préférence, par une bande de Velcro.

14. Système selon l'une des revendications précédentes comprenant ledit élément de recouvrement doté d'au moins une, de préférence deux, pièce(s) de côté en saillie (72) pour monter à coulissement les volets (79) permettant d'agrandir la paroi de panneau (20, 80) de 1' élément de recouvrement.

15. Système selon la revendication 14 comprenant des structures de logement (78), chacune étant dotée d'un canal de guidage pour monter à coulissement l'un desdits volets (79), lesdites structures de logement (80) étant raccordée aux dites pièces de côté (72) de l'élément de recouvrement (19).

16. Système selon la revendication 15 comprenant ladite structure de logement (78) dotée d'une paroi de boîtier (91) présentant plusieurs évidements de verrouillage (90) qui coopèrent avec des parties en saillie de verrouillage complémentaires (86, 94) formées sur le volet (79) dans le but de réaliser un ajustement pas-à-pas des volets (79).

17. Système selon la revendication 16, comprenant lesdits volets (79) dotés de parties de verrouillage en saillie ponctuelles ou s'étendant longitudinalement (86 ; 94) disposées en au moins une rangée et situées à égale distance l'une de l'autre.

18. Système selon l'une des revendications précédentes comprenant un harnais de câblage (110) pourvu de plusieurs supports (114) destinés aux câbles, fils et analogues, de sorte que ledit harnais de câblage doit être inséré entre la traverse inférieure et la traverse supérieure adjacente (5,6).

19. Système selon la revendication 18 comprenant ledit harnais de câblage (110) pourvu de patins de serrage (35) sur les deux extrémités en vue d'être fixé sur les traverses (5, 6).

20. Système selon la revendication 18 ou 19 dans lequel ledit harnais de câblage (110) est formé par une liaison profilée longitudinale (111) sur laquelle les supports (114) sont agencés sur les deux côtés et/ou à des niveaux de hauteur différents l'un de l'autre.

21. Système selon la revendication 20 comportant lesdits supports (114) formés par des éléments d'angle-support configurés, de préférence, en forme de L (113) connectés au harnais de câblage, de sorte que lesdits éléments coudés forment, respectivement, un support configuré en U (114) avec la liaison longitudinale (111).

22. Système selon la revendication 21 dans lequel les extrémités supérieures des éléments d'angle-support (113) sont fournies avec un bord courbe (115).

23. Système selon l'une des revendications précédentes comportant des panneaux (23) pour recouvrir l'espacement entre les traverses adjacentes (5, 6) qui sont formés par des parties de bordure repliées en forme de U (119, 120) sur leur bord supérieur et leur bord inférieur de même que présentant des ouvertures (123) dans les branches de U des parties de bordure (119, 120), de même que par des pinces de fixation (125) comportant une poche de pincement (126), lesdites pinces présentant une partie en saillie élastique repliée (129), de sorte que ladite partie en saillie repliée s'avance vers l'extérieur à travers ladite ouverture (123) après avoir été pincée par l'intermédiaire de la poche de pincement (126) sur la branche libre de l'une des parties de bordure (119, 120) de sorte que le panneau doit se clipper dans des évidements complémentaires en forme de gorge (132) dans la traverse en raison des parties en saillie élastiques repliées (129).

24. Système selon la revendication 23 comportant ladite pince de fixation (125) dotée de parties de verrouillage en saillie (130) dans la zone de poche de pincement (126), lesdites parties en saillie se montant dans des ouvertures respectives (124) formées dans la branche libre de la forme en U des parties de bordure (119, 120) pour fixer de façon détachable la pince sur le panneau (23).

25. Système selon l'une des revendications précédentes comprenant un logement de câble souple (135) formé par des modules de logement (136) à fixer ensemble selon une rangée.

26. Système selon la revendication 25 dans lequel ledit logement de câble (135) est fixé de façon détachable par au moins une pince de fixation (147) sur l'élément de paroi de séparation (1), en particulier sur la traverse.

27. Système selon la revendication 26 dans lequel ladite pince de fixation (147) doit être fixée par l'intermédiaire d'une interconnexion à pince avec un module (136) du logement de câble.

28. Système selon la revendication 25 ou 26 comprenant ladite pince de fixation (147) dotée d'une tête de verrouillage (150) formée, de préférence, par un élément sphérique et comprenant, de plus, ledit module (136) pourvu d'un raccord d'insertion à emboîtement respectif (153) sur une paroi latérale.

29. Système selon la revendication 28 comprenant ladite pince de fixation (147) dotée de parties de verrouillage en saillie supplémentaires (152), de préférence de deux parties de verrouillage en saillie (152), lesquelles sont alignées à l'opposé l'une de l'autre par rapport à la tête de verrouillage (150) et qui sont, de préférence, placées en ligne avec la tête de verrouillage (150) et qui coopèrent en tant qu'interconnexion à pince avec le module (136), lequel est pourvu d'évidements de verrouillage complémentaires respectifs (153, 154) sur une surface latérale destinée à cette interconnexion à pince.

30. Système selon la revendication 29 dans lequel les évidements de verrouillage (153, 154) sont formés de façon continue sur la longueur de la surface latérale du module (136).

31. Système selon l'une des revendications 25 à 30 dans lequel lesdits modules (136) prévoient une tête de verrouillage (143) formée, de préférence, par une sphère sur la première extrémité frontale et un raccord d'insertion à emboîtement complémentaire (144) pour ancrer les modules ensemble en une rangée sur l'autre surface frontale afin de former le logement de câble.

32. Système selon l'une des revendications 25 à 31 dans lequel ledit module (136) est formé par une section creuse dotée de deux chambres adjacentes de logements (138, 139) qui sont séparées par une bande transversale (140) de sorte que la tête de verrouillage (143) et le raccord d'insertion à emboîtement (144) sont formés dans la zone centrale de la bande transversale (140).

33. Système selon la revendication 32 comportant ledit module doté de deux fentes continues (142) s'étendant sur la surface latérale pour guider les câbles, de sorte que respectivement une fente correspond à l'une des deux chambres de logement (138, 139).

34. Système selon l'une des revendications 25 à 33 dans lequel chaque module (136) comporte plusieurs, de préférence deux, ouvertures d'accès séparées (141) permettant d'ancrer les modules sur les torons flexibles de résine (137) pour stabiliser le logement de câble (135).

35. Système selon l'une des revendications 25 à 34 dans lequel le module de logement (136) permettant d'y fixer des câbles guidés est doté d'une partie de serrage (170), laquelle peut être insérée dans une partie de support (171) dudit module de logement et dotée d'éléments de serrage.

36. Système selon la revendication 35 dans lequel ledit élément de serrage représente deux branches de serrage (172, 173) qui sont fournies avec des bandes de serrage (174) et agissent avec des supports de câble correspondants (175) de la partie de support (171).

37. Système selon la revendication 35 ou 36 dans lequel la partie de support (171) est pourvue d'un raccord à expansion (177) pour serrer le module de logement dans une fente d'un montant ou d'une traverse, ledit raccord étant expansible à l'aide d'une vis (176) fixant la partie de serrage (170) sur la partie de support (171).

38. Système selon l'une des revendications précédentes dans lequel ledit patin de serrage (35, 43, 101, 112, 148) est formé en plusieurs parties par au moins une fente, de préférence sous la forme d'un patin de serrage en deux parties, ou est formée sous la forme d'un patin d'insertion en une seule partie (43).

39. Système selon la revendication 38 dans lequel ledit patin de serrage (35, 43, 101, 112, 148) est formé par un arbre de fixation (69) et une partie de patin agrandie qui est raccordée à l'arbre de fixation (69) par des surfaces inclinées en forme de rampe situées sur les deux côtés (67).

40. Système selon la revendication 38 ou 39 comprenant ledit patin de serrage doté d'un côté étroit (64) particulièrement dans la zone de la partie de patin agrandie, ledit côté étroit étant plus étroit que la largeur de la fente (8) formée dans les traverses (5, 6) et un côté longitudinal (63) qui est plus long que la largeur de la fente longitudinale (8), de sorte que le patin de serrage (35, 43, 101, 112, 148) doit être inséré par le côté étroit dans la fente longitudinale (8) de la traverse (5, 6) et est maintenu après une rotation à l'intérieur de la fente (8) par le patin de serrage respectivement la partie de patin agrandie qui est montée derrière la fente (8) avec ses côtés longitudinaux (63).

41. Système selon l'une des revendications précédentes dans lequel lesdites traverses sont formées par un montant s'étendant longitudinalement avec une section creuse, doté de quatre parois latérales rectangulaires, lesdites traverses comportant des fentes (8, 18, 149) formées dans au moins deux parois latérales opposées, en vue de monter les éléments de fixation, particulièrement de monter les patins de serrage.

42. Système selon la revendication 41 dans lequel lesdites fentes (8, 18) sont formées par des rebords de panneaux décalés vers l'intérieur (9, 10), leurs extrémités libres formant des épaulements d'arrêt (11) permettant le montage des patins de serrage et analogue.

43. Système selon la revendication 41 ou 42 comprenant lesdites traverses dotées d'évidements de verrouillage (129) formés sur au moins deux côtés opposés pour fixer les panneaux (23), lesdits évidements de verrouillage étant, de préférence, formés comme des nervures configurés en V.

44. Système selon l'une des revendications 41 à 43 dans lequel les traverses présentent dans la coupe transversale un profilé à plusieurs chambres et sont constituées de métal extrudé, en particulier d'aluminium.
